(19)

Europäisches Patentamt

European Patent Office

Office européen des brevets

(11)  **EP 4 537 937 A1**

(12)  # EUROPEAN PATENT APPLICATION

(43) Date of publication:
   **16.04.2025  Bulletin 2025/16**

(21) Application number: **24205542.4**

(22) Date of filing: **09.10.2024**

(51) International Patent Classification (IPC):
   **B01L 3/00** (2006.01)

(52) Cooperative Patent Classification (CPC):
   **B01L 3/502761; B01L 3/50853;** B01L 2200/0642;
   B01L 2200/0673; B01L 2200/0689; B01L 2200/142;
   B01L 2300/0819; B01L 2300/0829;
   B01L 2300/0864; B01L 2300/0893

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **GE KH MA MD TN**

(30) Priority:  **13.10.2023  JP 2023177411
         13.10.2023  JP 2023177460**

(71) Applicant: **SYSMEX CORPORATION
   Kobe-shi
   Hyogo 651-0073 (JP)**

(72) Inventors:
   • **Okuda, Masaki
     Kobe-shi, Hyogo, 651-0073 (JP)**
   • **Yamawaki, Koya
     Kobe-shi, Hyogo, 651-0073 (JP)**
   • **Kawasaki, Kana
     Kobe-shi, Hyogo, 651-0073 (JP)**
   • **Iwanaga, Niina
     Kobe-shi, Hyogo, 651-0073 (JP)**
   • **Akama, Kenji
     Kobe-shi, Hyogo, 651-0073 (JP)**

(74) Representative: **Hoffmann Eitle
   Patent- und Rechtsanwälte PartmbB
   Arabellastraße 30
   81925 München (DE)**

(54)  **LIQUID TRANSPORTING METHOD, DIGITAL ASSAY METHOD, AND DIGITAL ASSAY APPARATUS**

(57)  The method according to an embodiment may be a method of transporting a liquid to a device (MWD) in which a plurality of microwells (M) formed on a substrate (8). The method includes: forming, in advance, at a position different from the device (MWD), a multiphase plug in which a solution for filling the plurality of microwells (M) and an immiscible liquid that is immiscible with the solution for sealing the plurality of microwells (M) filled with the solution are arranged in that order from a front in a flow direction; and transporting the multiphase plug to the device (MWD).

FIG. 1

## Description

CROSS REFERENCE TO RELATED APPLICATIONS

This application claims priority from prior Japanese Patent Applications No. 2023-177411, filed on October 13, 2023, and No. 2023-177460, filed on October 13, 2023, the entire contents of which are incorporated herein by reference.

BACKGROUND

The disclosure may relate to a liquid transporting method, a digital assay method, and a digital assay apparatus.
A method of transporting liquid to microwell arrays is known. For example, Patent Document 1 discloses a liquid transporting method using a digital microfluidic (DMF) device, in which an oil droplet is placed at a predetermined position of the DMF device and an aqueous droplet is moved via the position of the oil droplet to openings of wells arranged on the DMF device using DMF electrodes. In the liquid transporting method, the oil droplet moves along with the movement of the aqueous droplet, forming a two-phase droplet, so that the wells filled with the aqueous droplet are sealed by the oil droplet.
Patent Document 1: U.S. Patent Application Publication No. 2020/0 001300

SUMMARY

In the liquid transporting methods described above, it may be necessary to move the oil droplet along with the movement of the aqueous droplet, which may result in a low degree of freedom in the liquid transporting conditions, such as amounts and flow rates of the aqueous droplet and the oil droplet, making it difficult to control the liquid transportation.
An object of an embodiment of the disclosure may be to provide a liquid transporting method, a digital assay method, and a digital assay apparatus that can easily control transporting a liquid and an immiscible liquid to a device in which microwells are formed.

SUMMARY

A liquid transporting method according to a first aspect of the disclosure may be a method of transporting a liquid to a device (MWD) in which a plurality of microwells (M) formed on a substrate (B). The method may include: forming, in advance, at a position different from the device (MWD), a multiphase plug in which a solution for filling the plurality of microwells (M) and an immiscible liquid that is immiscible with the solution for sealing the plurality of microwells (M) filled with the solution are arranged in the recited order from a front in a flow direction; and transporting the multiphase plug to the device (MWD).
According to the liquid transporting method of the first aspect, the following steps are executed: forming the multiphase plug in advance at the position different from the microwell device (MWD), in which the solution for filling the plurality of microwells (M), and the immiscible liquid that is immiscible with the solution for sealing the plurality of microwells (M) filled with the solution, are arranged from the front in the flow direction; and transporting the multiphase plug to the microwell device (MWD). Accordingly, there is no need to form the multiphase plug on the microwell device (MWD), which brings about a high degree of freedom in the liquid transporting conditions, such as amounts and flow rates of the solution and the immiscible liquid. Therefore, it is possible to easily control transporting of the solution and the immiscible liquid to the device (MWD).
A digital assay method according to a second aspect of the disclosure may be a digital assay method of performing a digital assay using a device (MWD) in which a plurality of microwells (M) are formed on a substrate (B). The method includes: forming a multiphase plug in advance at a position different from the device (MWD), in which a solution for filling the plurality of microwells (M) and an immiscible liquid that is immiscible with the solution for sealing the plurality of microwells (M) filled with the solution are arranged in the recited order from a front in a flow direction; transporting the multiphase plug to the microwell device (MWD); and performing the digital assay in the plurality of microwells (M) which, by the transporting of the multiphase plug, are filled with the solution and sealed with the immiscible liquid.
According to the digital assay method of the second aspect, the following steps are executed: forming the multiphase plug in advance at the position different from the device (MWD), in which the solution for filling the plurality of microwells (M) and the immiscible liquid that is immiscible with the solution for sealing the plurality of microwells (M) filled with the solution are arranged from the front in the flow direction; transporting the multiphase plug to the microwell device (MWD); and performing the digital assay in the plurality of microwells (M) which, by the transporting of the multiphase plug, are filled with the solution and sealed with the immiscible liquid. According to the digital assay method of the second aspect, there is no need to form the multiphase plug on the device (MWD), which brings about a high degree of freedom in the liquid transporting conditions, such as amounts and flow rates of the solution and the immiscible liquid. Accordingly, it is possible to easily control transporting the solution and the immiscible liquid to the device (MWD). Therefore, for example, it is possible to control the time from when the solution is filled in the microwells (M) until when the microwells are sealed with the immiscible liquid. This allows the solution to be filled in the microwells and then immediately sealed with the immiscible liquid. This makes it possible to prevent reactants due to the solution from flowing out of the microwells (M), so as to increase signals obtained from the microwells (M) in the digital assay. More specifically, for example, after introducing a surfactant solution into the microwells (M) filled with bioparticles such as cells, exosomes, or the like and fracturing the bioparticles, the microwells can be sealed with the immiscible liquid without a time delay. Also, for example, after introducing a substrate solution into the microwells (M) filled with an enzyme-labeled test substance to initiate an enzyme-substrate reaction, the microwells can be sealed with the immiscible liquid without any time delay.

The digital assay apparatus according to an aspect may be a digital assay apparatus of performing a digital assay. The digital assay apparatus may include: a device (MWD) in which a plurality of microwells (M) formed on a substrate; a fluid management part connected to a liquid transporting port of the device, and configured to form, at a position different from the device, a multiphase plug in which a solution for filling the plurality of microwells (M) and an immiscible liquid that is immiscible with the solution for sealing the plurality of microwells (M) filled with the solution are arranged in the recited order from a front in a flow direction, and to transport the multiphase plug to the device (MWD); and a detector configured to detect assay analytes in the plurality of microwells (M) that is filed, by the transporting of the multiphase plug, with the solution and sealed with the immiscible liquid.

According to the digital assay apparatus of the disclosure, the apparatus may include: the device (MWD) in which the plurality of microwells (M) formed on the substrate; and the fluid management part connected to the liquid transporting port of the device and configured to form, at the position different from the device, the multiphase plug in which the solution for filling the plurality of microwells (M) and the immiscible liquid that is immiscible with the solution for sealing the plurality of microwells (M) filled with the solution are arranged in the recited order from the front in the flow direction, and to transport the multiphase plug to the device (MWD). According to the digital assay apparatus of the second aspect, there is no need to form the multiphase plug on the microwell device (MWD), and thus there is a high degree of freedom in the liquid transporting conditions, such as amounts and flow rates of the solution and the immiscible liquid. Accordingly, it is possible to easily control transporting the solution and the immiscible liquid to the device (MWD). Therefore, for example, it is possible to control the time from when the solution is filled in the microwell (M) until when the microwell is sealed with the immiscible liquid. This allows the solution to be accommodated in the microwells (M) and then immediately sealed with the immiscible liquid. This makes it possible to prevent reactants due to the solution from flowing out of the microwells (M), so as to increase signals obtained from the microwells (M) in the digital assay. More specifically, for example, after introducing a surfactant solution into the microwells (M) filled with bioparticles such as cells, exosomes, or the like and fracturing the bioparticles, the microwells can be sealed with the immiscible liquid without a time delay. Also, for example, after introducing a substrate solution into the microwells (M) filled with an enzyme-labeled test substance to initiate enzyme-substrate reaction, the microwells can be sealed with the immiscible liquid without any time delay.

According to the aspects described above, it is possible to provide a liquid transporting method, a digital assay method, and a digital assay apparatus that can easily control transporting a liquid and an immiscible liquid to a device in which a plurality of microwells are formed.

BRIEF DESCRIPTION OF DRAWINGS

FIG. 1 is a diagram illustrating a schematic view of an overview of a liquid transporting method.
FIG. 2 is a diagram illustrating a schematic view of an overview of a digital assay method and a multi-step digital assay method.
FIG. 3 is a diagram illustrating a schematic view of an overview of a digital assay method using a liquid transporting method.
FIG. 4 is a diagram illustrating a view of an overall configuration of a closed type control system according to an embodiment.
FIG. 5 is a diagram illustrating a schematic view of an overview of a method for forming a three-phase plug.
FIG. 6 is a diagram illustrating a schematic view of an overview of a method for transporting the three-phase plug.
FIG. 7 is a diagram illustrating a schematic view of an overview of a method for forming a two-phase plug.
FIG. 8 is a diagram illustrating a schematic view of an overview of a method for transporting the two-phase plug.
FIG. 9 is a diagram illustrating an example of a cross-sectional view of a closed type microwell device.
FIG. 10 is a diagram illustrating an example of a top view of the closed type microwell device.
FIG. 11 is a diagram illustrating a schematic view of an overview of a first example of a method of producing a closed type microwell device.
FIG. 12 is a diagram illustrating a schematic view of an overview of a second example of a method of producing a closed type microwell device.

FIG. 13 is a diagram illustrating a schematic view of a flow of Example 1.

FIG. 14 is a diagram illustrating a view of experimental results of Example 1.

FIGS 15A and 15B are diagrams illustrating other experimental results of Example 1.

FIG. 16 is a diagram illustrating a schematic view of a flow of Example 2.

FIG. 17 is a diagram illustrating experimental results of Example 2.

FIG. 18A is a graph illustrating a fluorescence intensity in A647ch fluorescence images. FIG. 18B is a graph illustrating a fluorescence intensity in FLch fluorescence images.

FIG. 19 is a diagram illustrating a schematic view of a flow of Example 3.

FIG. 20A is a diagram illustrating examples of fluorescent images A acquired in Step 1 in FIG 19 and fluorescent images B acquired in Step 3 in FIG 19. FIG. 20B is a diagram illustrating examples of a fluorescence intensity of a microwell in which ALP is detected. FIG. 20C is a diagram illustrating examples of a fluorescence intensity of a microwell in which β-Gal is detected.

FIG. 21 is a diagram illustrating a schematic view of a flow of Example 4.

FIG. 22 is a diagram illustrating a schematic view of an analysis flow of Example 4.

FIGS. 23A and 23B are diagrams illustrating examples of detection results when Steps 2 to 11 are carried out using a sample prepared in Step 1 in FIG. 21 that contains no exosomes. FIGS. 23C and 23D are diagrams illustrating examples of detection results when Steps 2 to 11 are carried out using a sample prepared in Step 1 in FIG. 21 that contains 16 μg of exosomes per sample.

FIG. 24 is a diagram illustrating other experimental results of Example 4.

FIG. 25 is a diagram illustrating a schematic view of a flow of Example 5.

FIG. 26 is a diagram illustrating a schematic view of a flow of a comparative example with respect to Example 5.

FIG. 27 is a diagram illustrating comparison results between Example 5 and the comparative example.

FIG. 28A is a diagram illustrating examples of states inside a microwell device according to Example 5. FIG. 28B is a diagram illustrating examples of states inside a microwell device according to the comparative example.

DETAILED DESCRIPTION

Hereinafter, one or more embodiments of the disclosure will be described with reference to the drawings. Note that the same elements are given the same reference numerals and duplicated explanations are omitted. In addition, unless otherwise specified, positional relationships such as up, down, left, right, etc. are based on the positional relationships illustrated in the drawings. Further, the dimensional proportions of the drawings are not limited to those illustrated in the drawings. Furthermore, the following embodiments are merely examples for explaining the disclosure, and the disclosure is not limited to these embodiments.

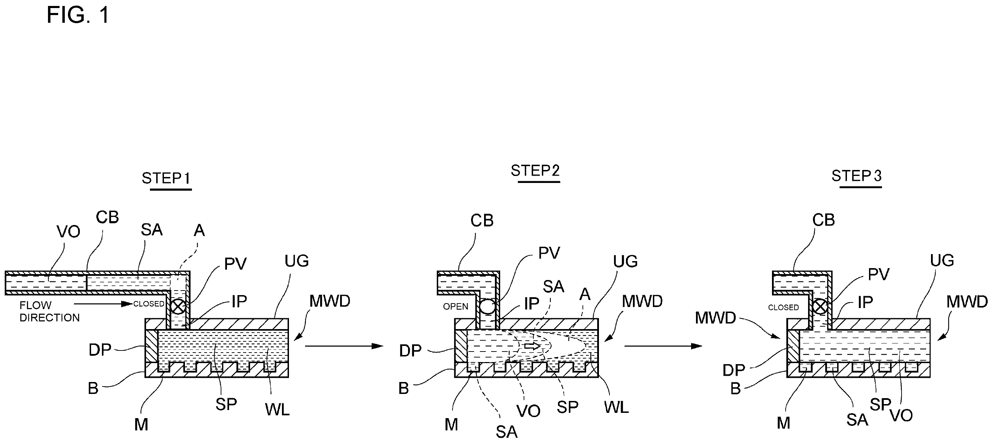

FIG. 1 is a diagram illustrating a schematic view of an overview of a liquid transporting method according to an embodiment of the disclosure. This liquid transporting method is a method for transporting liquids to a microwell device MWD (device). As illustrated in FIG. 1, the microwell device MWD includes a substrate B on which a plurality of microwells M are formed, and an upper glass UG arranged above the substrate B. The upper glass UG is arranged with a distance from the substrate B so that a space SP is formed between the substrate B and the upper glass UG. The liquid transporting method according to an embodiment of the disclosure is a method for transporting a multiphase plug, which will be described later, to the microwell device MWD. In the liquid transporting method, for example, a multiphase plug is formed (Step 1) in advance at a position different from the microwell device MWD, in which at least a solution SA (e.g., a reagent solution) for filling the plurality of microwells M, and an immiscible liquid (e.g., a volatile oil VO) that is immiscible with the solution SA for sealing the multiple microwells M filled with the solution SA, are arranged from the front in a flow direction. In the example of FIG. 1, the multiphase plug further contains an air A, such that the multiphase plug is configured with the air A, the solution SA, and the immiscible liquid arranged in this order from the front in the flow direction. Here, an example of the position different from the microwell device MWD includes a predetermined position in a tube CB connected to a liquid transporting port IP of the microwell device MWD. In the disclosure, the term "multiphase plug" refers to a collection of fluids in which different types of fluids are connected without mixing with each other. The types of fluids in the "multiphase plug" may be two or more types, and may be gas, liquid, or a combination thereof. It may be preferable that the "multiphase plug" is formed in a channel to maintain its shape.

When a pinch valve PV is controlled to be in an open state, the multiphase plug starts to be transported into the space SP of the microwell device MWD (Step 2). In an initial state, the space SP is filled with, for example, the cleaning liquid WL, but as the multiphase plug is transported, the air A, the solution SA, and the volatile oil VO gradually enter from the front in the flow direction sequentially. Then, after each of the plurality of microwells M is filled with the solution SA, each of the plurality of microwells M is sealed with a volatile oil VO (Step 3). In such a liquid transporting method, the multiphase plug is formed in advance at the position different from the microwell device MWD. Accordingly, there is no need to form the multiphase plug on the microwell device MWD, and thus there is a high degree of freedom in the liquid transporting conditions, such as amounts and flow rates of the solution and the immiscible liquid. Therefore, it is possible to easily control transporting of the solution and the immiscible liquid into the microwell device (MWD).

Here, for example, the volume of the solution SA in the multiphase plug is set based on a time length from the time when a predetermined microwell M among the plurality of microwells M is filled with the solution SA to the time when the predetermined microwell is sealed with the volatile oil VO. The volume (V) of the solution SA is set substantially by the following formula:

$$V = S \times v \times t$$

(S: a cross-sectional area in the space SP in the liquid transporting direction, v: a flow velocity of the multiphase plug in the space SP, and t: a time from when the microwell M is filled with the solution SA to when it is sealed with the volatile oil VO).

The time t from when the microwell M is filled with the solution SA to when the microwell M is sealed with the volatile oil VO is arbitrary, and may be set appropriately based on, for example, the volume of the solution SA. In a case where the volume of the solution SA is relatively large, the time t is preferably 4 seconds or less. In a case where the volume of the solution SA is relatively small, the time t is preferably 1 second or less.

The volume of the volatile oil VO in the multiphase plug is equal to or greater than the volume of the space SP of the microwell device MWD. With this configuration, the volatile oil VO is sufficiently filled in the space SP, so that the solution SA contained in the plurality of microwells M can be appropriately sealed.

Any of the above described steps can be performed using an automated apparatus or manual method. For example, in view of reproducibility, it is preferable to carry out the procedure using an automated apparatus. The automated apparatus may include a device configured with an air pressure supplier such as a syringe pump or an air pressure pump, an air pressure controller such as a regulator, a flow path such as a tube, and a fluid controller such as a pinch valve or an electromagnetic valve. The automated apparatus may, for example, form a multiphase plug in a tube such as a Teflon tube connected to a syringe pump using the syringe pump, and transport the multiphase plug to a microwell device, thereby replacing an immiscible liquid that seals a plurality of microwells filled with a solution with a gas.

There are no particular limitations on situations in which this liquid transporting method can be applied, and various details are possible. In the liquid transporting method, for example, one of bioparticles such as cells, exosomes, or the like is individually introduced into each microwell. When the liquid transporting method sequentially introduces, into each microwell, a solution containing a surface antigen detection reagent for detecting antigens present on a surface of a biologically derived particle (bioparticle), a solution containing a reagent for extracting inclusions from the bioparticle, and a solution containing an inclusion detection reagent for detecting the extracted inclusions, which enables the bioparticles to be analyzed one by one. When the fluid transporting method introduces a bioparticle such as a cell, an exosome, or the like into each microwell individually, seals a solution containing a reagent for detecting a biomarker in each microwell and detects the biomarker, and then replaces the solution in each microwell with a cell culture fluid, which enables single-cell screening.

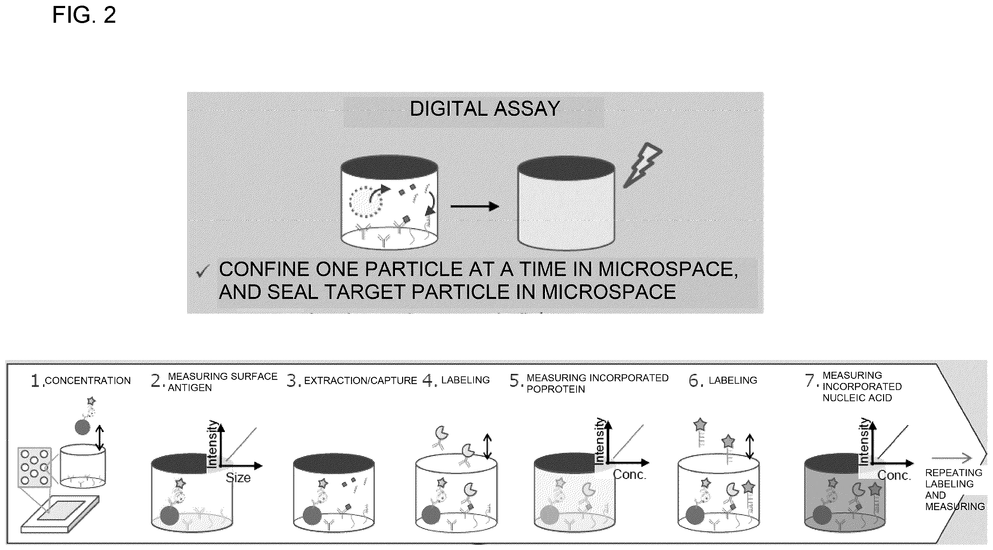

FIG. 2 is a diagram illustrating a schematic view of an overview of a digital assay method and a multi-step digital assay method. The digital assay method is an assay method that uses a plurality of microspaces such as microwells, droplets, etc. As illustrated in an upper part of FIG. 2, the digital assay method, for example, seals target particles respectively in the microspaces one by one, and counts any one of the microspaces that emits a signal such as fluorescence due to the presence of the microparticle as 1 while counting any one of the microspaces that does not emit the signal as 0, so as to qualitatively or quantitatively measure the microparticles.

As illustrated in a lower part of FIG. 2, the multi-step digital assay method may perform, for example, introducing into each microwell a solution concentrated to increase a concentration of biological particles (bioparticles) and sealing the cell one by one in each microwell ("1. Concentration"), measuring surface antigens of the cells ("2. Surface antigen measurement"), extracting inclusions (e.g., incorporated proteins and incorporated nucleic acids) from the cells using an extraction solution or the like and capturing the extracted inclusions ("3. Extraction/capture"), labeling the incorporated proteins using a labeling reagent ("4. Labeling"), measuring the incorporated proteins ("5. Incorporated protein measurement"), labeling the incorporated nucleic acids using a labeling reagent ("6. Labeling"), and measuring the incorporated nucleic acids ("7. Incorporated nucleic acid measurement"). The digital assay method is not limited to the above described techniques and may include other steps as appropriate.

Furthermore, in the digital assay method, it is possible to carry out a plurality of digital assays consecutively in the same space by replacing solutions in the microspace (multi-stage digital assay).

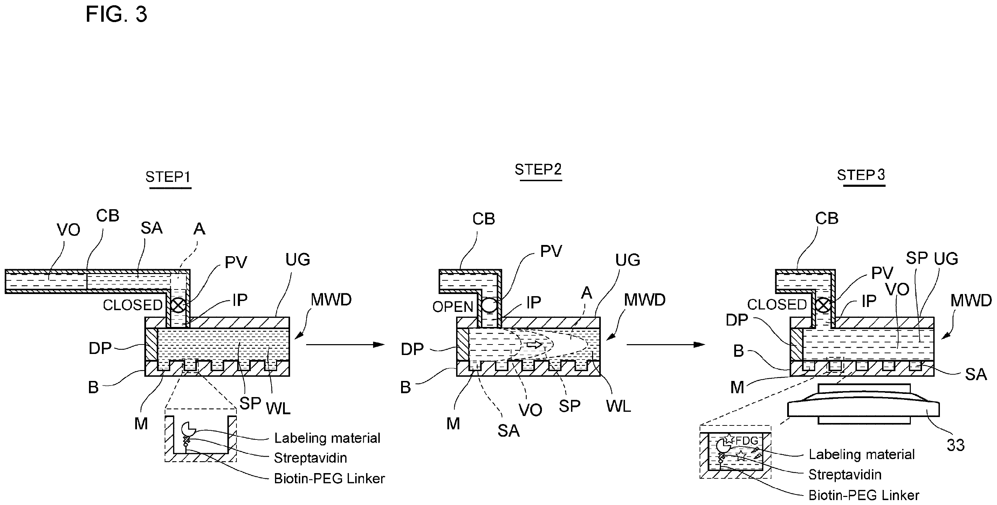

FIG. 3 is a diagram illustrating a schematic view of an overview of a digital assay method using a liquid transporting method according to an embodiment of the disclosure. The digital assay method according to an embodiment of the disclosure is a digital assay method in which a digital assay is performed using a microwell device MWD. As illustrated in FIG. 3, in the digital assay method of an embodiment of the disclosure, for example, a multiphase plug is formed in advance in a tube CB connected to a liquid transporting port IP of the microwell device MWD, in which at least a solution SA (e.g., a reagent solution) for filling a plurality of microwells M in the microwell device, and an immiscible liquid (e.g., a volatile oil VO) that is immiscible with the solution SA for sealing the plurality of microwells M that are filled with the solution SA are arranged from a front in a flow direction (Step 1). In the example of FIG. 3, the multiphase plug further contains an air A, such that the multiphase plug is configured with the air A, the solution SA, and the immiscible liquid arranged in this order from the front in the flow direction.

When a pinch valve PV is controlled to be in an open state, the multiphase plug starts to be transported into the space SP of the microwell device MWD (Step 2). In an initial state, the space SP is filled with, for example, the cleaning liquid WL, but as the multiphase plug is transported, the air A, the solution SA, and the volatile oil VO gradually enter from the front in the flow direction sequentially. Thereafter, by the transporting of the multiphase plug, the plurality of microwells is filled with the solution SA and sealed with the volatile oil VO, and then a digital assay is performed in the plurality of microwells M (Step 3). It should be noted that the digital assay method is not limited to the above-mentioned steps. For example, the digital assay method may further include a step of introducing biologically derived particles (bioparticles) into the plurality of microwells M prior to the transporting of the multiphase plug to the microwell device MWD. In such a case, the solution contains a substance (e.g., a fluorescent substrate (FDG) as illustrated in Step 3) for detecting surface molecules of the particles, and the digital assay performed in Step 3 is an assay for detecting the surface molecules of the particles. Moreover, it may be preferable that the substrate B in which the plurality of microwells M are formed is formed of a transparent material in order to enable optical assay.

According to the digital assay method using the liquid transporting method, there is no need to form the multiphase plug on the microwell device MWD, which brings about a high degree of freedom in the liquid transporting conditions, such as amounts and flow rates of the solution and the immiscible liquid. Accordingly, it is possible to easily control transporting of the solution and the immiscible liquid into the microwell device (MWD). This allows the reagent solution to be placed in the microwells and then immediately sealed with the immiscible liquid. This makes it possible to prevent reactants due to the reagent solution from flowing out of the microwells, and to increase the signal obtained from the microwells M in the digital assay. More specifically, for example, after introducing a surfactant solution into the microwells (M) filled with bioparticles such as cells, exosomes, or the like and fracturing the bioparticles, the microwells can be sealed with the immiscible liquid without a time delay. Also, for example, after introducing a substrate solution into the microwells (M) filled with an enzyme-labeled test substance to initiate enzyme-substrate reaction, the microwells can be sealed with the immiscible liquid without any time delay.

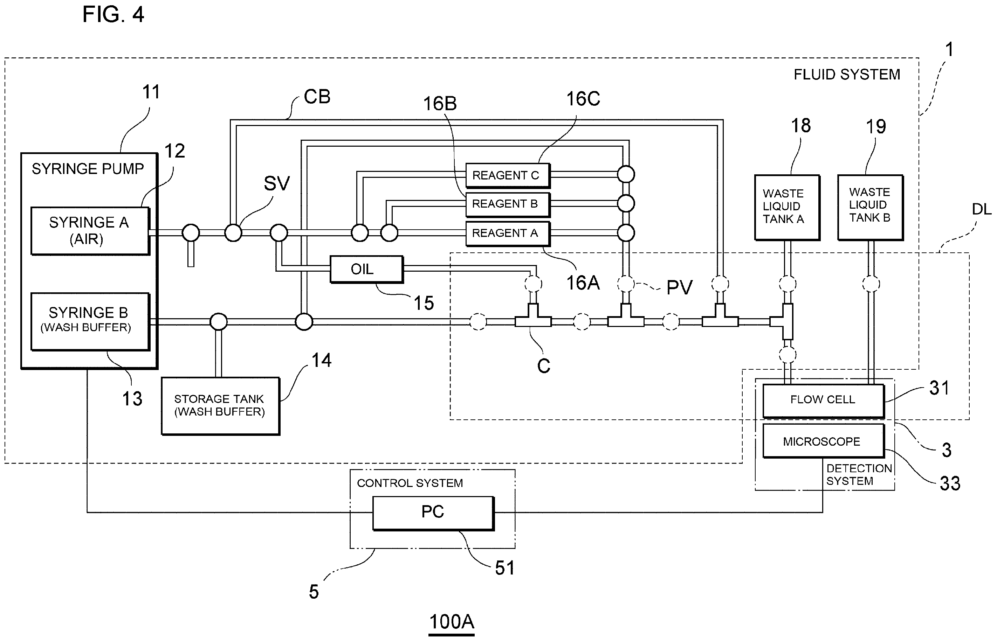

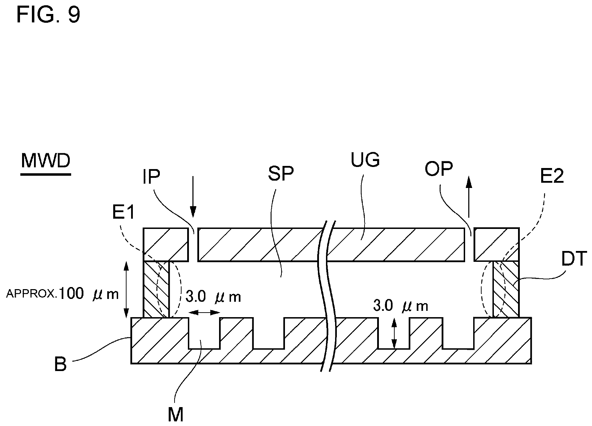

Next, a closed type control system according to an embodiment is described with reference to FIGS. 4 to 10. The closed type control system (or closed type control system) refers to a control system equipped with a microwell device such as being illustrated in FIG. 9 described below, in which a closed space SP is formed by providing an upper glass UG above microwells M.

FIG. 4 is a diagram illustrating a view of an overall configuration of the closed type control system. As illustrated in FIG. 4, the closed type control system 100A includes, by way of example, a fluid system 1, a detection system 3, and a control system 5. The control system 100A is an example of a digital assay apparatus that performs a digital assay.

The fluid system 1 (fluid management part) includes, for example, a syringe pump (pump part) 11, a storage tank 14, an oil management part (immiscible liquid management part) 15, a reagent A management part (first solution management part) 16A, a reagent B management part (second solution management part) 16B, a reagent C management part (third solution management part) 16C, a waste liquid tank A18, and a waste liquid tank B19. The above described components of the fluid system 1 are connected to one another with tubes CB. At connecting points of the tubes CB, for example, a 3-way electromagnetic valve SV, a pinch valve PV, and a 3-point connector C are provided. For example, at least one of the components of the fluid system 1, the 3-way electromagnetic valve SV, and the pinch valve PV may be controlled by control signals from a PC 51 in the control system 5, or by control signals from a control unit (or a controller) (not illustrated) provided in the fluid system 1.

The syringe pump 11 includes, by way of example, a syringe A12, which delivers, for example, an air to the tube CB, and a syringe B13, which delivers, for example, a wash buffer as a cleaning liquid to the tube CB. The storage tank 14 is a tank that stores, for example, the wash buffer.

The oil management part 15 includes a container for storing an oil, for example. By operating the syringe A12, the oil in the oil management part 15 is delivered to a waste liquid tank A18 or a flow cell 31 through the downstream tubing CB by the air pressure The reagent A management part 16A, the reagent B management part 16B, and the reagent C management part 16C are equipped with containers for storing the reagent A, the reagent B, and the reagent C, respectively. By operating the syringe A12, the reagent A in the reagent A management part 16A, the reagent B in the reagent B management part 16B, and the reagent C in the reagent C management part 16C are delivered to the waste liquid tank A18 or the flow cell 31 via the downstream tubing CB by the air pressure. For example, the reagents A, B, and C may be reagents different from each other, or at least two of the reagents may be a common reagent. In the control system 100A, the types of the reagents are not limited, and the number of the types of the reagents may be two or less, or four or more.

The waste liquid tank A18 is a tank for storing waste liquids generated in the fluid system 1. The waste liquid tank B19 is a tank for storing waste liquids from the flow cell 31.

The detection system 3 includes, for example, the flow cell 31 and a microscope (detector) 33. The flow cell 31 is, for example, a measurement container configured to measure a measurement specimen or the like transported through the tubes CB. The flow cell 31 includes, for example, a plurality of microwells. The microwell device that includes the substrate B and the upper glass UG described with reference to FIG. 3 may be used as the flow cell 31, for example.

The microscope 33 is, for example, a device configured to magnify an object and capture an image of the object. The microscope 33 includes, for example, a microscope and an imaging part to image the object magnified by the microscope. The microscope of the microscope 33 is placed at a position facing the microwells, for example, to obtain information from the microwells filled with a solution.

Examples of the microscope include a stereomicroscope, a fluorescence microscope, a laser scanning microscope, and an optical microscope such as a confocal laser microscope. Examples of the microscope include an electron microscope such as a transmission electron microscope and a scanning electron microscope, an atomic force microscope, a scanning probe microscope such as a scanning tunneling microscope and a scanning near-field light microscope, an X-ray microscope, and an ultrasonic microscope. The imaging part may be located at a location where an observation image of the microscope can be captured, for example, at an eyepiece lens unit, a photographic straight tube, a C-mount, or the like. The imaging part is not particularly limited as long as the imaging part is configured to capture at least one of a still image and a moving image, for example. The imaging part may be, for example, a digital camera, an analog camera, a digital video camera, an analog video camera, or the like.

The control system 5 executes, for example, operation control of the syringe pump 11 and other parts of the fluid system 1. The control system 5 executes, for example, operation control of the microscope 33 in the detection system 3. The control system 5 is equipped with, for example, the PC (Personal Computer) 51. The PC 51 is, for example, a device operated by a user of the control system 100A. The PC 51 includes, for example, a CPU and a memory, and may realize the above mentioned control functions of the PC51 by executing a program stored in the memory. The program to be executed by the CPU may be stored in a storage medium The storage medium storing the program may be a non-transitory computer readable medium (NTM). The non-transitory storage medium is not particularly limited, but may be, for example, a storage medium such as a solid state drive (SSD), a universal serial bus (USB) memory, a compact disc ROM (CD-ROM), or the like. The PC 51 may be equipped with an output device such as a display for displaying detection results of the detection system 3 or the like. The PC 51 may be equipped with an input device such as a keyboard for inputting operation instructions by the user.

<Method of forming and transporting multiphase plug>

In the liquid transporting method, for example, for replacing an immiscible liquid with a gas, a multiphase plug including three phases of the gas, a solution, and the immiscible liquid may be formed in advance in a tube or a pipette tip before the gas is transported onto a substrate, and then the multiphase plug may be transferred.

In particular, it may be preferable to use the multiphase plug when the microwells need to be sealed with the immiscible liquid immediately after the microwells are replaced with the solution. According to this method, for example, after introducing a surfactant solution (solution) into the microwells filled with bioparticles such as cells, exosomes, or the like and fracturing the bioparticles, the microwells can be sealed with the immiscible liquid without a time delay. Therefore, it is possible to prevent inclusions of the bioparticles from leaking out of the microwells or leaked inclusions of the bioparticles from diffusing into adjacent microwells. Furthermore, after introducing a substrate solution into the microwells in which enzymes are immobilized, the microwells can be sealed with the immiscible liquid without a time delay. Therefore, it is possible to prevent the enzyme reaction products from leaking out of the microwells or leaked enzyme reaction products from diffusing to adjacent microwells.

In a case where a multiphase plug is formed in a tube, the multiphase plug may be formed by injecting an immiscible liquid, a solution, and an air into the tube in sequence by controlling a fluid controller, such as an electromagnetic valve or the like, for example. Specifically, after the immiscible liquid is injected into the tube, the fluid controller may be switched to inject the solution so as to replace a front part, in a flow direction, of the immiscible liquid with the solution. Then, the fluid controller may be switched to inject the air so as to replace a front part, in the flow direction, of the solution with the air. In this way, the three-phase plug is formed with the air, the solution, and the immiscible liquid in this order from the front of the flow direction.

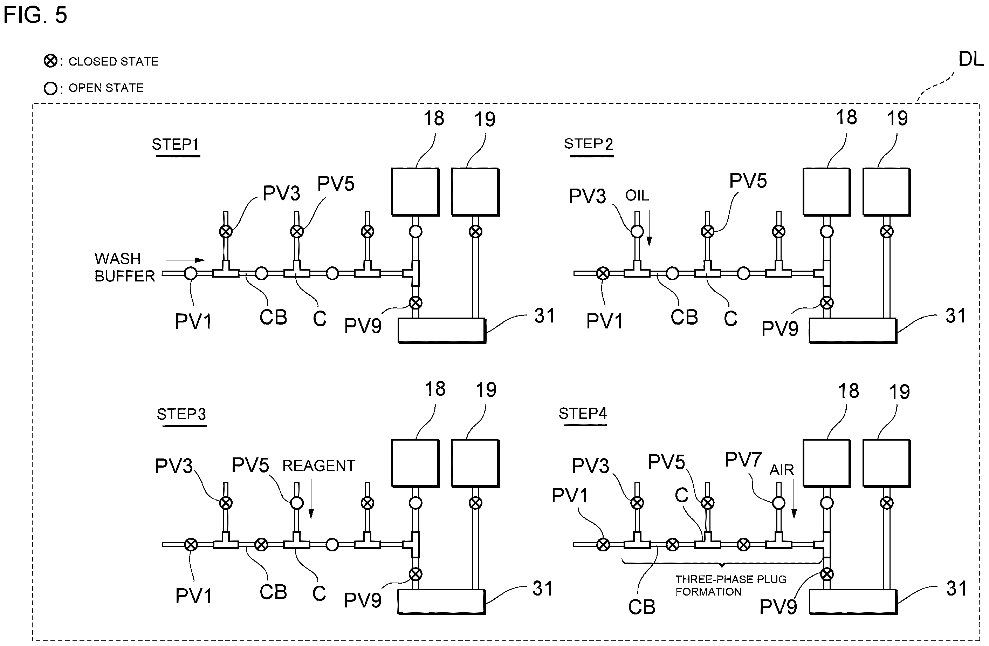

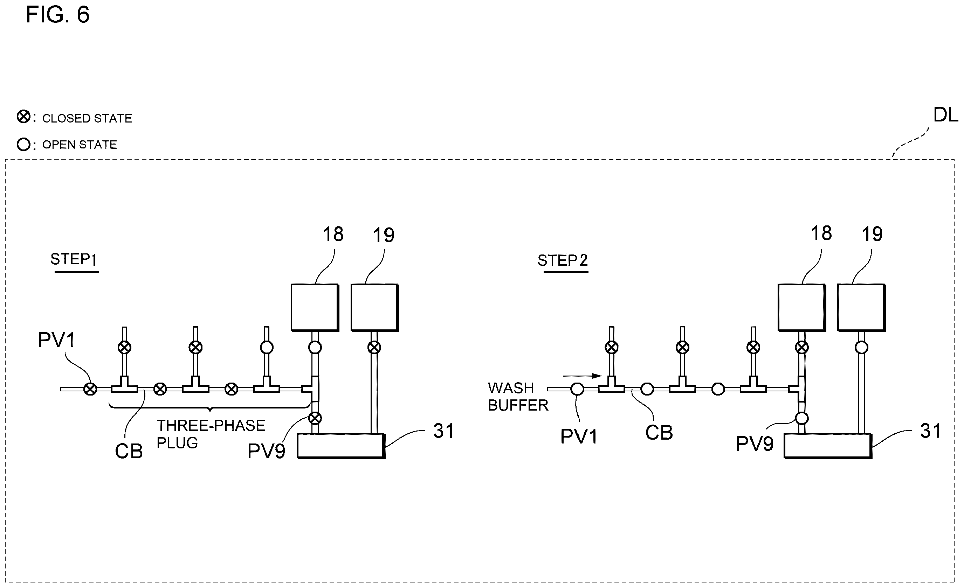

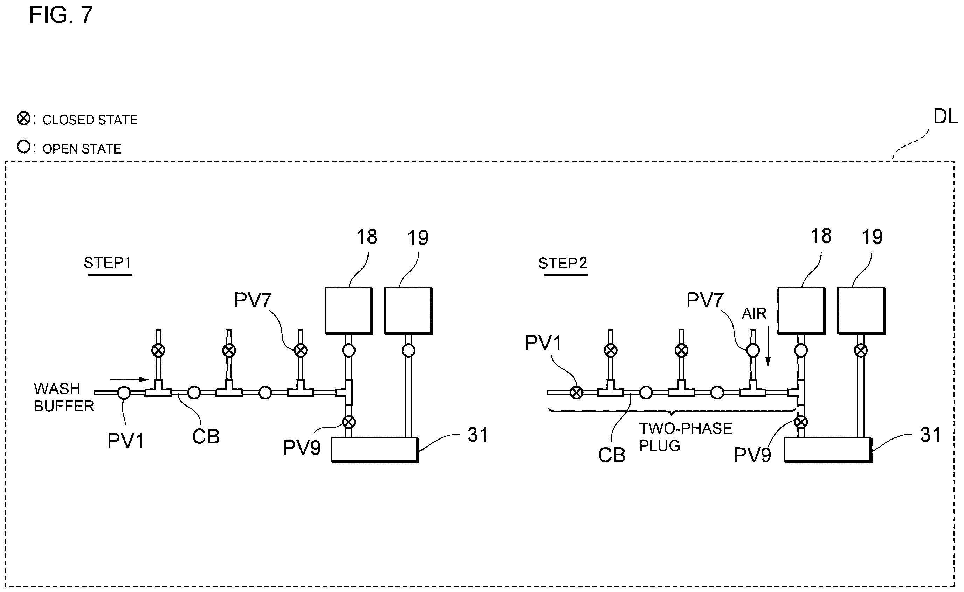

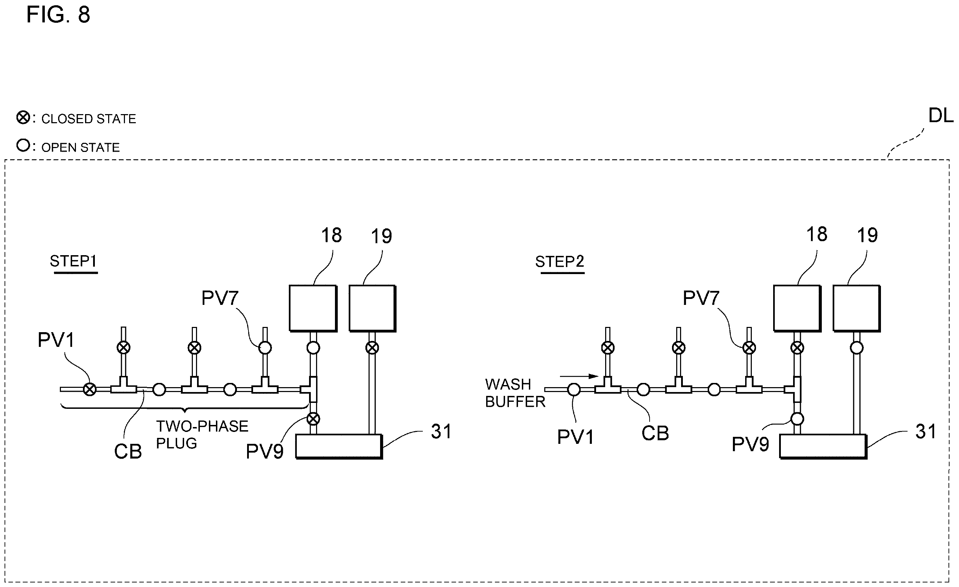

Next, methods of forming and transporting a three-phase plug and a two-phase plug are described in detail with reference to FIGS. 5 to 8 below. FIG. 5 is a diagram illustrating a schematic view of an overview of a method for forming a three-phase plug. FIG. 6 is a diagram illustrating a schematic view of an overview of a method for transporting a three-phase plug to a flow cell. FIG. 7 is a diagram illustrating a schematic view of an overview of a method for forming a two-phase plug. FIG. 8 is a diagram illustrating a schematic view of an overview of a method for transporting the two-phase plug to a flow cell. FIGS. 5 to 8 are enlarged views of a portion enclosed by the dashed line DL in FIG. 4. In FIGS. 5 to 8, the pinch valve that is marked with an "x" indicates that the pinch valve is in a closed state, and the pinch valve that is not marked with an "x" indicates that the pinch valve is in an open state.

Methods of forming and transporting the three-phase plug are described with reference to FIGS. 5 and 6 below. As illustrated in FIG. 5, in the fluid system 1, the pinch valve PV1 is switched to the open state and the wash buffer is transferred into the tube CB. As a result, the inside of the tube CB is washed (Step 1). In the fluid system 1, the pinch valve PV1 is switched to the closed state and the pinch valve PV3 is switched to the open state, and then the oil is introduced into the tube CB (Step 2). In the fluid system 1, after the pinch valve PV3 is switched to the closed state and the pinch valve PV5 is switched to the open state, the reagent (solution) is introduced into the tube CB. As a result, the front part, in the flow direction, of the oil is replaced by the reagent (Step 3). In the fluid system 1, the pinch valve PV5 is switched to the closed state and the pinch valve PV7 is switched to the open state, and then the air is introduced into the tube CB. As a result, a front part, in the flow direction, of the reagent is replaced with the air (Step 4). Through these steps, as illustrated in FIG. 5, the three-phase plug is formed in the tube CB between the pinch valve PV1 and the pinch valve PV9, with the air, the reagent, and the oil being arranged in this order from the front in the flow direction. Note that the above described three-phase plug is only an example, and other fluids may be used to form a three-phase plug. The order in which fluids are introduced to form a three-phase plug is also arbitrary.

As illustrated in FIG. 6, in the fluid system 1, from the state in which the three-phase plug is formed in Step 4 of FIG. 5 (Step 1 in FIG. 6), the pinch valve PV9 is switched to the open state and the pinch valve PV1 is switched to the open state, and then the syringe B13 is activated to push the three-phase plug out of the tube CB, so as to transfer the three-phase plug to the flow cell 31 (Step 2 in FIG. 6). By executing Step 2 in FIG. 6 from the state in which the three-phase plug is formed, the liquid transportation in Step 2 to Step 4 described in FIG. 3 can be executed without stopping the flow of liquid.

Methods of forming and transporting a two-phase plug are described with reference to FIGS. 7 and 8 below. As illustrated in FIG. 7, in the fluid system 1, the pinch valve PV1 is switched to the open state so that the wash buffer is transferred into the tube CB (Step 1). As a result, the inside of the tube CB is washed. In the fluid system 1, the pinch valve PV1 is switched to the closed state and the pinch valve PV7 is switched to the open state, and then the air is introduced into the tube CB. As a result, a front part, in the flow direction, of the wash buffer is replaced with the air (Step 2). In this way, as illustrated in FIG. 7, the two-phase plug is formed in the tube CB between the pinch valve PV1 and the pinch valve PV9, with the air and the wash buffer arranged in this order from the front in the flow direction. The above described two-phase plug is only an example, and other fluids may be used to form a two-phase plug. The order in which fluids are introduced to form a two-phase plug is also arbitrary. For example, in Step 1, the oil may be introduced into the tube CB instead of the wash buffer, and in Step 2, the reagent may be introduced instead of the air. This forms a two-phase plug in which the reagent (solution) and the oil (immiscible liquid) are arranged in this order from the front in the flow direction.

As illustrated in FIG. 8, in the fluid system 1, from the state where the two-phase plug is formed in Step 2 of FIG. 7 (Step 1 in FIG. 8), the pinch valve PV9 is switched to the open state and the pinch valve PV1 is switched to the open state, and then the syringe B13 is activated to push the two-phase plug out of the tube CB so as to transfer the two-phase plug to the flow cell 31 (Step 2 in FIG. 8).

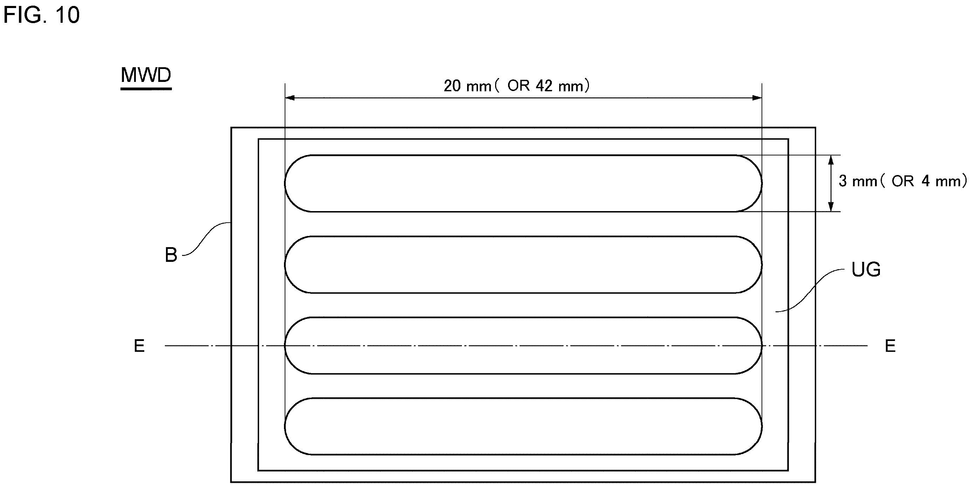

Next, with reference to FIGS. 9 and 10, an example of the microw ell device (an example of the flow cell 31 illustrated in FIG. 4) in the clos ed type control system 100A is described. FIG. 9 is a diagram illustratin g an example of a cross-sectional view of the closed type microwell devic e. FIG. 10 is a diagram illustrating an example of a top view of the clos ed type microwell device. FIG. 9 illustrates the cross-sectional view taken along the line E-E illustrated in the top view of FIG. 10.

As illustrated in FIG. 9 and FIG. 10, the microwell device MWD includes, for example, an upper glass UG placed on a double-sided tape DT affixed on a substrate B. For optical assays, it may be preferable that the substrate B is formed of a transparent material. The upper glass UG includes an inlet port IP (liquid transporting port) in the vicinity of one end E1 of a space SP and an outlet port OP in the vicinity of the other end E2 of the space SP. For example, when replacing an oil (immiscible liquid) with a gas, the gas may be introduced into the space SP from the inlet port IP provided near the one end E1 of the space SP, and the oil may be discharged from the outlet port OP provided near the other end E2 of the space SP. The inlet port IP may introduce, into the space SP, liquids other than the gas, such as an oil, a reagent, or the like. The outlet port OP may also discharge from the space SP gases and liquids other than the oil, such as a reagent or the like.

The microwells M are arranged on the substrate B with a pitch (an interval) of 12 $\mu$m, for example. A shape of the microwell is arbitrary, but for optical assays, it may be preferable that a bottom surface of the microwell is flat. A width of the microwell (for example, when the bottom surface of the microwell is circular, this indicates the diameter) is not particularly limited, but is preferably 100 $\mu$m or less, more preferably 10 $\mu$m or less, and even more preferably 5.0 $\mu$m or less.

A depth of the microwell is not particularly limited, but is preferably less than 100 $\mu$m, more preferably less than 10 $\mu$m, and even more preferably less than 5.0 $\mu$m. The number of the microwells M included in the microwell device MWD is arbitrary, but may be $10^3$ or more, preferably $10^4$ or more, and more preferably $10^5$ or more from a viewpoint of highly sensitive detection of the substance to be tested when a digital assay is performed using the microwells M. A thickness of the double-sided tape DT is arbitrary as long as the tape DT is thick enough for the connection between the upper glass UG and the substrate B, but is preferably, approximately 100 $\mu$m, for example.

<Solution>

The "solution" (reagent) used in an embodiment is not particularly limited as long as it is a solution that is not miscible with the oil. Examples of a "solvent" in the solution include water, hydrophilic alcohol, hydrophilic ether, ketone, nitrile solvent, carboxylic acid, amine solvent, dimethyl sulfoxide, and the like. Specifically, examples of the hydrophilic alcohol include methanol, ethanol, propanol, glycerin, etc. Examples of the hydrophilic ether include tetrahydrofuran, polyethylene oxide, etc. Examples of the ketone include acetone, methyl ethyl ketone, etc. Examples of the nitrile solvent include acetonitrile, etc. Examples of the carboxylic acid include formic acid, acetic acid, butyric acid, propionic acid, etc. Examples of the amine solvent include N, N-dimethylformamide, 2-aminoethanol, 2,2',2"-nitrilotriethanol, 2,2'-Iminodiethanol, etc. Among these, water may be preferred because it does not inhibit chemical reactions with bioparticles, cell cultures, or the like in the microwells.

Examples of "solute" in the solution include protein, nucleic acid, bioactive substance, inorganic salt, surfactant, fluorescent substance, low molecular weight compound, buffer substance, etc. Specifically, examples of the protein include BSA, casein, antigen, antibody, alkaline phosphatase, b-galactosidase, horseradish peroxidase, and streptavidin, etc. Examples of the nucleic acid include DNA, RNA, aptamer, etc. Examples of the bioactive substance include cell growth factor, differentiation inducing factor, cell adhesion factor, cytokine, hormone, sugar chain, lipid, etc. Examples of the inorganic salt include $Na_3PO_4$, $Na_2HPO_4$, $NaH_2PO_4$, NaCl, KCl, $MgCl_2$, $ZnCl_2$, etc.

Examples of the surfactant include Tween (registered trademark) series, Triton (registered trademark) X-100, SDS, Lipidure (registered trademark) series, etc. Examples of the fluorescent substance include Fluorescein, Rhodamine, Texas Red, Tetramethylrhodamine, Carboxyrhodamine, Fecoerythrin, Cy (registered trademark) 3, Cy (registered trademark) 5, Alexa Fluor (registered trademark) series, FDP, FDG, Amplex red (registered trademark), Amplex Ultrared (registered trademark), etc. Examples of the low molecular weight compound include biotin, etc.

Note that in a case where the chemical reaction such as an antigen-antibody reaction, an enzyme-substrate reaction, or the like is performed in the microwells, a solution containing antigen, antibody, enzyme, or fluorescent substance may be used, for example. In a case where cells is cultured in the microwells, a cell culture medium such as DMEM or the like may be used as a solution.

<Immiscible liquid>

The immiscible liquid used in an embodiment is a liquid that is immiscible with the solution described above. Examples of the immiscible liquid include saturated hydrocarbon, unsaturated hydrocarbon, aromatic hydrocarbon, silicone oil, perfluorocarbon, and oil such as halogenated solvent. The volatile oil, for example, may be preferred for the immiscible liquid. The volatile oil is easily displaced by gas, which ensures that the oil sealing the microwells is removed from the substrate, allowing the solution to accurately fill the microwells.

Examples of the saturated hydrocarbon include alkane, cycloalkane, and the like. Examples of the alkane include hexane, decane, and the like. Examples of the unsaturated hydrocarbon include squalene, and the like. Examples of the aromatic hydrocarbon includes benzene, toluene, and the like. Examples of the perfluorocarbon include Fluorinert ™ FC-72 (3M), Fluorinert ™ FC-40 (3M), Fluorinert ™ FC-43 (3M), and the like Examples of the halogenated solvent include chloroform, methylene chloride, chlorobenzene, Asahikurin AE-3000 (AGC), Asahikurin AE-3100 (AGC), Asahikurin AC-6000 (AGC), Asahikurin AC-2000 (AGC), Novec ™ 7000 (3M), Novec ™ 7100 (3M), Novec ™ 7200 (3M), Novec ™ 7300 (3M), HFE-7500 (3M), and the like. Among these, AE-3100 and Novec-7100 may be particularly preferred because they have a relatively high vapor pressure.

The volatility of oil may be expressed in terms of vapor pressure thereof, and may be preferable that the oil has a vapor pressure of 0.15 kPa or higher at 25°C (degrees Celsius), for example. The vapor pressure of oil is the pressure of the gas when it is in a state of vapor-liquid equilibrium with that substance at that temperature. The vapor pressure at 25°C may be determined by placing the oil in a vacuum vessel, maintaining the temperature at 25°C, and measuring the pressure of the gas when it is in vapor-liquid equilibrium state.

<Method of producing closed type microwell device>

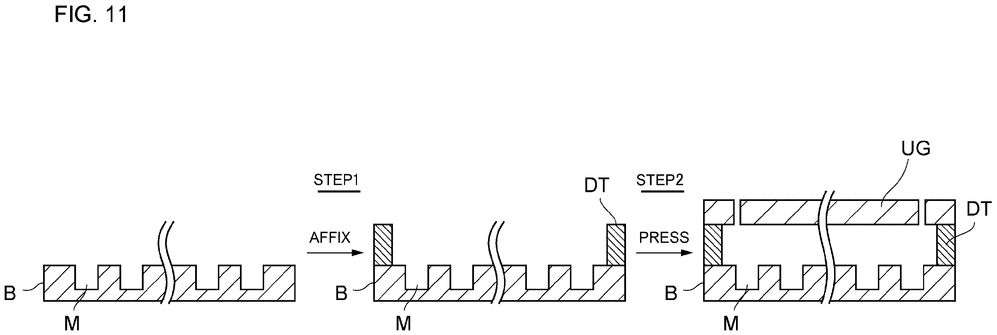

FIG. 11 is a diagram illustrating a schematic view of an overview of a first example of a method of producing a closed type microwell device. In the first example of the method of producing the microwell device, an antibody or an enzyme is not immobilized in microwells M. As illustrated in FIG. 11, a double-sided tape DT that has been punched out to a predetermined size is attached to a substrate B (Step 1). Next, an upper glass UG is pressed against and attached to the double-sided tape DT so as to produce the microwell device (Step 2). The produced microwell device may then be injected with a wash buffer, for example.

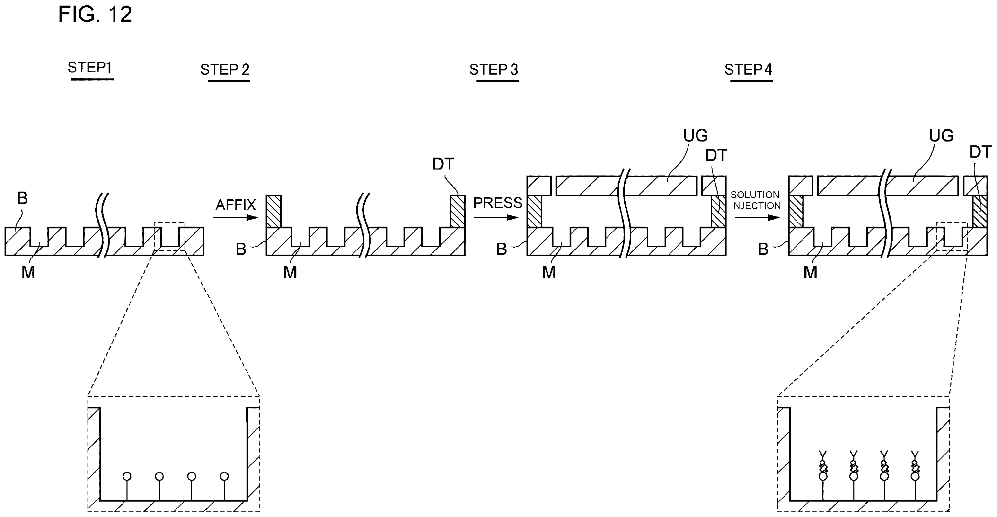

FIG. 12 is a diagram illustrating a schematic view of an overview of a second example of a method of producing a closed type microwell device. In the second example of the method of producing the closed type microwell device, an antibody or an enzyme is immobilized in microwells M.

In the following, an example of modifying the microwells M with a biotin-bound PEG linker is described with reference to sub-steps (1) to (10) (Step 1). (1) A substrate B on which a plurality of microwells M are formed is placed in an ozone irradiation device and irradiated with ozone for, for example, 20 seconds. (2) After (1), the substrate B is immersed in, for example, ethanol and ultrasonically cleaned for, for example, 5 minutes. (3) In a glass cup, for example, (3-Mercaptopropyl)-trimethoxysilane is added dropwise to 150 mL of a reaction solution (2.5% acetic acid/90% ethanol) to the final concentration of 2 w/v%, and the mixture in the glass cup is stirred at 650 rpm for 5 minutes. (4) The substrate B obtained by (2) is immersed in the glass cup obtained by (3) and left to stand at the room temperature for, for example, 12 hours or more. (5) After (4), the substrate B is washed with ultrapure water and dried with a blower. (6) After (5), the substrate B is placed in a thermostatic dryer (set temperature: for example, 90 °C) and left to stand for 30 minutes. (7) After (6), the substrate B is taken out of the thermostatic dryer and returned to room temperature. (8) A 1 mM biotin-conjugated PEG reagent/25 mM MES solution is prepared. (9) For example, 400 $\mu$L of the biotin-bound PEG solution of (8) is added to the substrate B prepared by (7), which is then degassed for 5 minutes in a degasser and left to stand at the room temperature for 1 hour. (10) The substrate B prepared by (9) is washed with ultra-pure water and dried with a blower.

To the substrate B that is obtained by the above described Step 1, a double-sided tape DT that has been punched to a predetermined size is attached (Step 2). Next, an upper glass UG is pressed against and attached to the double-sided tape DT to produce the microwell device (Step 3). Thereafter, a solution containing, for example, avidins, a target biotinylated antibody, a target enzyme, etc. is injected into the microwell device (Step 4). The biotinylated antibody includes, for example, at least one of an anti-PSA monoclonal antibody and an anti-Tau monoclonal antibody.

<Overview of each Example>

Each example is described below. The following is a summary of each Example.

| Example | | Liquid transportation | Microwell |
|---|---|---|---|
| Example 1 | Continuous replacement | Dye (1) solution → Dye (2) solution → Dye (1) solution | Closed type (Antibody fixed, Automatic control) |
| Example 2 | Replacement of three types of solutions | Dye (1) solution →Cleaning liquid →Dye (2) solution | Closed type (Antibody fixed, Automatic control) |
| Example 3 | Enzymatic reaction in well with different enzymes | Substrate (1) solution →Cleaning liquid →Substrate (2) solution | Closed type (Two enzymes fixed, Automatic control) |
| Example 4 | Detecting single particle and quantifying particle inclusions | Substrate (1) solution →Cleaning liquid →Antibody solution →Substrate (2) solution | Closed type (Antibody fixed, Automatic control) |
| Example 5 and Comparative example | Comparison between transportation of multiphase plug and sequential transportation of liquids | Substrate (1) solution →Cleaning liquid →Antibody solution →Substrate (2) solution | Closed type (Antibody fixed, Automatic control) |

<Microwell device of Example 1 and Example 2>

Next, a method of producing a closed type microwell device used in Example 1 and Example 2 is described in detail. In this producing method, a PSA antibody is bound to a biotin-conjugated PEG linker modified on microwells of a microwell device.

(1) First, the microwell device that is obtained by Step 3 in FIG. 12, that is, the microwell device modified with the biotin-bound PEG linker, is prepared. (2) A 0.001 mg/mL neutravidin/Tris solution is prepared. The composition of the Tris solution includes Tris-HCl: 0.1 M, NaCl: 150 mM, MgCl2: 1 mM, ZnCl2: 0.1 mM, goat IgG: 1 mg/mL, mouse IgG: 1 mg/mL, BSA: 1% (w/v), casein: 0.5% (w/v), blocking reagent: 30 $\mu$g/mL, and NaN3: 0.1% (w/v).

(3) To 510 μL of the neutravidin/Tris solution obtained by (2), 1 μL of a 1 mg/mL biotinylated antibody solution is added and the mixture is stirred at the room temperature for 10 minutes. The antibody includes an anti-PSA monoclonal antibody (Product No. A45170) manufactured by Biospecifics. For biotinylation, Biotin Labeling Kit SH (Product No. LK10) manufactured by DOJINDO is used.

(4) 200 μL of HISCL Washing Solution (Sysmex) is injected into the microwell device prepared by (1). (5) 100 μL of the solution prepared by (3) is injected into the microwell device prepared by (4) and left to stand at the room temperature for 30 minutes. (6) 200 μL of HISCL Washing Solution is injected into the microwell device prepared by (5).

<Microwell device of Example 4 and Example 5>

Next, a method of producing a closed type microwell device used in Example 4 and Example 5 is described in detail. In this producing method, a Tau antibody is bound to a biotin-conjugated PEG linker modified onto a microwell device.

(1) First, the microwell device that is obtained by Step 3 in FIG. 12, that is, the microwell device modified with the biotin-bound PEG linker, is prepared. (2) An 0.001 mg/mL neutravidin (31000, ThermoFisher) is added to a Tris solution to a final concentration of 0.001 mg/mL. (3) The biotinylated anti-Tau antibody solution prepared by (2) is added to the neutravidin/Tris solution prepared by (2) to the final concentration of 0.002 mg/mL, and the mixture is stirred at the room temperature for 10 minutes. The antibody includes an anti-Tau monoclonal antibody (Product No. 806501) manufactured by BioLegend. For biotinylation, Biotin Labeling Kit SH (Product No. LK10) manufactured by DOJINDO is used.

(4) 200 μL of HISCL Washing Solution (Sysmex) is injected into the microwell device prepared by (1). (5) 100 μL of the solution prepared by (3) into the microwell device prepared by (4) and left to stand at the room temperature for 30 minutes. (6) 500 μL of HISCL Washing Solution is injected into the microwell device prepared by (5).

<Microwell device of Example 3>

Next, a method of producing a closed type microwell device used in Example 3 is described in detail. In this producing method, an enzyme is attached to a biotin-conjugated PEG linker that is modified onto a microwell device.

(1) First, the microwell device that is obtained by Step 3 in FIG. 12, that is, the microwell device modified with the biotin-bound PEG linker, is prepared. (2) 12.0 pM of a streptavidin-labeled β-Gal (S3887-.5MG, Sigma Aldrich)/PBS solution is prepared. (3) An ALP reaction solution (pH = 9.25) is prepared with the following composition. The composition of the solution includes: 1.0 M 2,2'-iminodiethanol (11920-65, Nacalai Tesque), 1.0 mM $MgCl_2$ (133-00161, Wako), and 0.10% (v/v) Tween 20 (T2530, Tokyo Chemical Industry).

(4) 2.8 pM of a streptavidin-labeled ALP (11089161001, Roche)/ALP reaction solution is prepared. (5) 100 μL of the streptavidin-labeled β-Gal/PBS solution prepared by (2) is added to 100 μL of the streptavidin-labeled ALP/ALP reaction solution prepared by (4). (6) 200 μL of HISCL Washing Solution (Sysmex) is injected into the microwell device prepared by (1). (7) To the microwell device prepared by (6), 150 μL of the mixed solution obtained by (5) is injected and immediately thereafter 400 μL of HISCL Washing Solution is injected.

Before going into a detailed description of each Example, reagents and samples used in the Examples, and imaging methods using a fluorescent microscope used in experiments are described below.

<Reagents>

The reagents include, for example, 1. an enzyme solution, 2. an antibody solution, 3. an enzyme substrate solution, and 4. a fluorescent dye solution.

(1. Enzyme solution)

The enzyme solution may be an ALP solution. (1) An ALP reaction solution (pH = 9.25) is prepared with the following composition. The composition of the solution includes: 1.0 M 2,2'-iminodiethanol (11920-65, Nacalai Tesque), 1.0 mM $MgCl_2$ (133-00161, Wako), and 0.10% (v/v) Tween 20 (T2530, Tokyo Chemical Industry). (2) An ALP solution of 2.8 pM is prepared by using the ALP reaction solution prepared by (1) and streptavidin-labeled ALP (11089161001, Roche).

(2. Antibody solution)

An example of the antibody solution includes an ALP-labeled anti-Tau antibody solution. The ALP-labeled anti-Tau antibody solution is used in Example 4 and Example 5. 0.25 nM of an ALP-labeled anti-Tau antibody/Tris solution is prepared. The Antibody includes an anti-Tau monoclonal antibody (Product No. 806501) manufactured by BioLegend. For biotinylation, ALP Labeling Kit SH (Product No. LK13) manufactured by DOJINDO is used.

(3. Enzyme substrate solution)

Examples of the enzyme substrate solution include (1) an ALP fluorescent substrate solution used in Example 3, (2) an ALP fluorescent substrate solution (with dye) used in Example 4 and Example 5, (3) a β-Gal fluorescent substrate solution used in Example 3, and (4) a β-Gal fluorescent substrate/extract solution (containing dye) used in Example 4 and Example 5.

(1) The ALP fluorescent substrate solution is prepared as a 2.0 mM FDP/ALP reaction solution using the ALP reaction solution (pH = 9.25) described in "1. Enzyme solution" and a 50 mM FDP (11600, AAT Bioquest) aqueous solution. (2) The ALP fluorescent substrate solution (containing dye) is prepared as a 1.0 mM FDP (11600, AAT Bioquest)/0.02 mM A647/ALP reaction solution using the ALP reaction solution (pH = 9.25) described in "1. Enzyme solution", FDP, and A647. (3) The β-Gal fluorescent substrate solution is prepared as a 250 $\mu$M FDG (F2756-5MG, Sigma Aldrich)/PBS solution.

(4) For the β-Gal fluorescent substrate/extraction solution (containing dye), (i) a 2% (v/v) Triton X-100 (A16046, Alfa Aesar)/specimen diluent (CS617657, Sysmex) is prepared, and (ii) a 2% (w/v) BSA/specimen diluent is prepared. (iii) The solutions prepared in (i) and (ii) are mixed in equal amounts to prepare an extract solution, (iv) A 0.25 mM FDG (F2756-5MG, Sigma Aldrich)/0.02 mM A647 (A20347, ThermoFisher)/extraction solution is prepared.

(4. Fluorescent dye solution)

Examples of the Fluorescent dye solution include (1) a Fluorescein/HISCL Washing Solution used in Example 2, (2) an A488/extraction solution used in Example 1, (3) an A647/extraction solution used in Example 1 and Example 2, and (4) an A647/ALP reaction solution used in Example 2.

(1) The Fluorescein/HISCL Washing Solution is prepared as follows. (i) A 200 mM aqueous solution of fluorescein (F0096, Tokyo Chemical Industry Co., Ltd.) is prepared. (ii) The aqueous solution of the fluorescein prepared in (i) is diluted with HISCL Washing Solution to a final concentration of 4 mM.
(2) The A488/extraction solution is prepared as follows. (i) A 2% (v/v) Triton X-100 (A16046, Alfa Aesar)/specimen diluent (CS617657, Sysmex) is prepared. (ii) A 2% (w/v) BSA/specimen diluent is prepared. (iii) The solution prepared in (i) and the solution prepared in (ii) are mixed in equal amounts to prepare an extract solution, (iv) 10 $\mu$M) of the A488 (A10254, ThermoFisher)/extraction solution is prepared.
(3) The A647/extract solution is prepared as follows. The extract solution prepared in (2)(iii) is used to prepare 10 $\mu$M) of an A647 (A20347, ThermoFisher)/extract solution (the extract solution used in Example 1). The extract solution prepared in (2)(iii) is used to prepare 0.3 mM of the A647 (A20347, ThermoFisher)/extract solution (the extract solution used in Example 2). (4) The A647/ALP reaction solution is prepared as 0.3 mM of an A647/ALP reaction solution using the above-mentioned ALP reaction solution.

<Sample>

An immune complex solution containing exosomes, magnetic particles, and β-Gal used in Example 4 and Example 5 is described below. The immune complex solution is prepared as follows. (1) The magnetic particles labeled with anti-CD9 antibodies are dispensed into a tube so that there are approximately 10 million particles per sample, and the particles are washed with HISCL Washing Solution. After washing, the entire HISCL Washing Solution is discarded. The antibodies include anti-CD9 monoclonal antibodies (Product No. 312102) manufactured by BioLegend. The magnetic particles includes magnetic particles manufactured by Thermo Fisher Scientific (Product No. 14311D). (2) 80 $\mu$L of a Tris solution is added to the tube prepared by (1). (3) A dilution series of the exosome solution (amount of exosome per sample: 0.128 $\mu$g, 3.2 $\mu$g, 16 $\mu$g, 80 $\mu$g) are prepared using PBS (Sigma Aldrich, P4417-100TAB). The exosomes are collected from the supernatant of HCT116 cell line cultured cells by size exclusion chromatography.
(4) 20 $\mu$L of each of the exosome solutions prepared by (3) is added to the solution prepared by (2). For exosome-negative samples, 20 $\mu$L of the Tris solution is added. (5) The sample prepared by (4) is shaken for 1 hour (1200 rpm, room temperature). (6) The sample prepared by (5) is washed twice with 200 $\mu$L of HISCL Washing Solution. After washing, the entire HISCL Washing Solution is discarded. (7) A 0.001 mg/mL biotinylated anti-CD63 antibody/Tris solution is prepared. The antibody includes BioLegend's anti-CD63 monoclonal antibody (Product No. 353014). For biotinylation, Biotin Labeling Kit SH (Product No. LK10) manufactured by DOJINDO is used. (8) 100 $\mu$L of the solution prepared by (7) is added to the tube prepared by (6). (9) The sample prepared by (8) is shaken in a shaker for 30 minutes (1200 rpm, room temperature).

(10) The sample obtained by (9) is washed twice with 200 $\mu$L of HISCL Washing Solution. After washing, the entire HISCL Washing Solution is discarded. (11) A 1.2 pM streptavidin-labeled $\beta$-Gal (Sigma, product number: S3887-5MG)/Tris solution is prepared. The prepared solution is filtered using a 0.22 $\mu$m filter. (12) 100 $\mu$L of the solution prepared by (11) is added to the tube prepared by (10). (13) The sample prepared by (12) is shaken with a shaker (1200 rpm, room temperature) for 30 minutes. (14) The sample prepared by (13) is washed three times with 500 $\mu$L of HISCL Washing Solution. After washing, the entire HISCL Washing Solution is discarded. (15) 20 $\mu$L of the Tris solution is added to the tube prepared by (14).

An average number $\lambda$ of the exosomes per magnetic particle is given by Equation 1 below.

$$\text{(Equation 1)}$$

$$\lambda = N_{exo} / N_{bead}$$

($N_{exo}$ : number of exosomes in a sample, and $N_{bead}$ : number of magnetic particles in a sample (= 10 million))

$N_{exo}$ is calculated using Equation 2.

$$\text{(Equation 2)}$$

$$N_{exo} = m_{exo} \times n_{exo}$$

($m_{exo}$ : mass of exosomes, and $n_{exo}$ : number of exosomes per 1 mg of exosomes (= $1.4 \times 10^8$/mg))

<Imaging method>

In the imaging method using the fluorescence microscope in each Example, the following fluorescence microscope and imaging condition are adopted. The fluorescence microscope is equipped with a microscope: IX-83, Olympus, a camera: Zyla 4.2 sCMOS, ANDOR, an objective lens: UCPLFLN20X, Olympus, a light source: X-Cite TURBO, EXCELITAS Technologies, and a fluorescence mirror unit: U-FBNA, Olympus. The imaging condition includes an excitation light intensity: approximately 0.08 mW, an exposure time: 100 ms, and number of fields of view: 60 (size of one field of view: 685.3 mm $\times$ 685.3 mm). Next, each Example is described in detail. First, Example 1 is described below.

<Example 1>

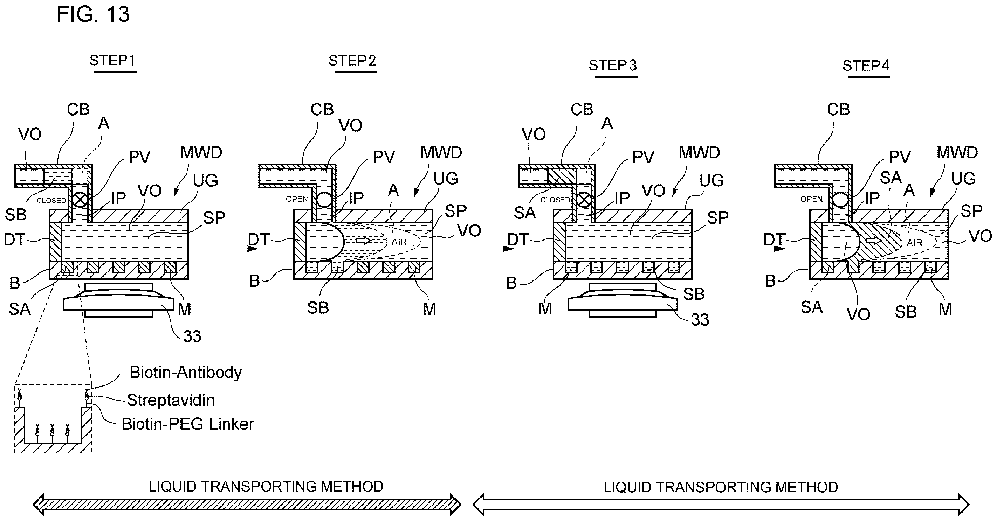

Example 1 is described with reference to FIGS. 13 to 15. In Example 1, the closed type control system 100A illustrated in FIG. 4 enables automatic liquid transportation to the closed type microwell device. In Example 1, solution replacement (solution exchange) between an A488/extraction solution (first solution) and an A647/extraction solution (second solution) is performed. In the closed type control system 100A illustrated in FIG. 4, the A488/extraction solution is stored in the reagent A management part 16A, the A647/extraction solution is stored in the reagent B management part 16B, and HISCL Washing Solution is stored in the storage tank 14. In Example 1, the closed type microwell device to which an anti-PSA monoclonal antibody is immobilized is used. Although the antibody-immobilized microwell device is used in anticipation of antigen-antibody reactions in the microwells, the reagents do not include antigens. In Example 1, as reagents, a fluorescein/PBS solution, a cleaning liquid, and a volatile oil (AE-3000) are used. AE-3000 has a vapor pressure of 31 kPa at 25°C, and an evaporation rate (ratio) of 67 with respect to ethyl ether at 100.

FIG. 13 is a diagram illustrating a schematic view of a flow of Example 1. First, in the microwell device MWD, the solution SA is filled in the microwells M and the solution SA in the microwells M is sealed with the oil VO, and then a fluorescent image A is obtained by imaging the microwell device MWD with the microscope 33 (Step 1). Next, a three-phase plug (the air A, the A647/extraction solution (solution SB), and the oil VO arranged from the front in the flow direction) is formed in the tube CB and transferred to the microwell device MWD. As a result, the oil VO in the space SP is replaced with the air A, the solution SB is introduced into the space SP where the oil VO has been replaced with the air A so that the solution SA in the microwells M is replaced with the solution SB, and then the solution SB is sealed with the oil VO (Step 2). After the solution SB is filled in the microwells M and sealed with the oil VO, the microwell device MWD is imaged by the microscope 33 to obtain a fluorescent image B (Step 3).

Next, a three-phase plug (the air A, the A488/extraction solution (solution SA), and the oil VO arranged from the front in the flow direction) is formed in the tube CB and transferred to the microwell device MWD. As a result, the oil VO in the space SP is replaced with the air A, the solution SA is introduced into the space SP where the oil VO has been replaced with the air A so that the solution SB in the microwells M is replaced with the solution SA, and then the solution SA is sealed with the oil VO (Step 4). Then, returning to Step 1, the solution SB in the microwells M is replaced with the solution SA and sealed with the oil VO, after which the microwell device MWD is imaged by the microscope 33 to obtain a fluorescent image C. Such a cycle of steps 1 to 4 is repeatedly executed.

As described above, the volume of the solution SA in the three-phase plug formed in the tube CB is set based on the time from when a predetermined microwell M among the plurality of microwells M is filled with solution SA to when the predetermined microwell M is sealed with the volatile oil VO. The volume (V) of the solution SA is set substantially by the following formula:

$$V = S * v * t$$

(S: cross-sectional area in the space SP in the liquid transporting direction, v: flow velocity of the multiphase plug in the space SP, and t: time from when the microwell M is filled with the solution SA to when it is sealed with the volatile oil VO).

In this Example, $V = 30 \ mm^3$, $S = 0.28 \ mm^2$, $v = 27 \ mm/sec$, and $t = 4 \ sec$.

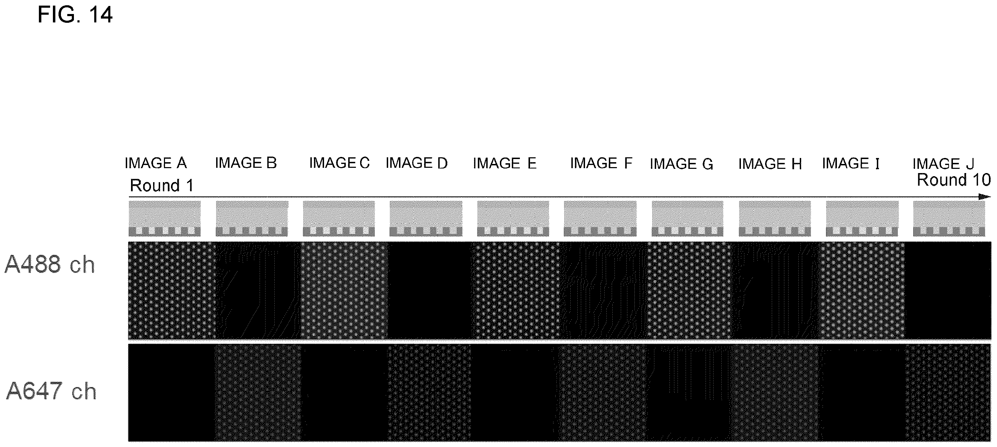

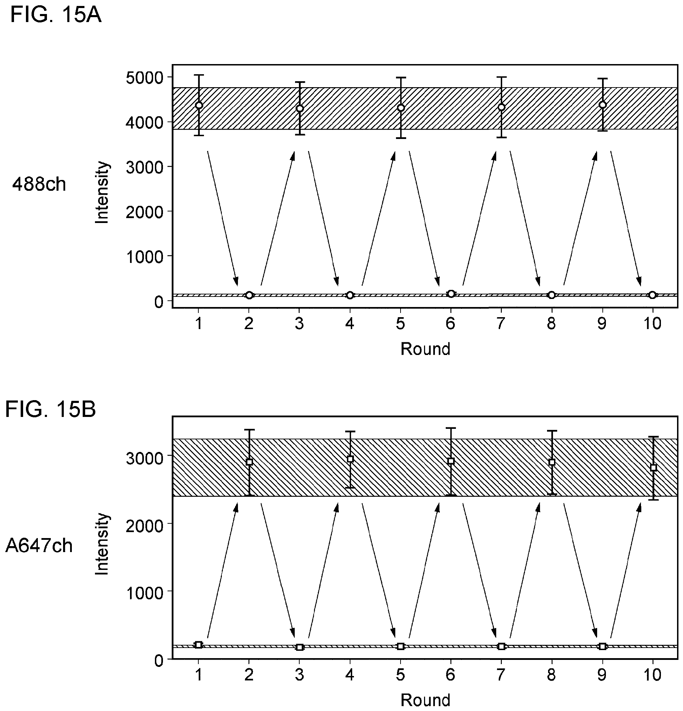

Experiment results of Example 1 are described with reference to FIGS. 14 and 15 below. FIG. 14 is a diagram illustrating a view of fluorescent images acquired by the microscope. A488ch in FIG. 14 corresponds images captured which are filtered to the wavelength of the fluorescence emitted from the solution SA, wherein each bright spot in the captured image corresponds to a microwell M that contains the solution SA. A647ch in FIG. 14 corresponds images captured which are filtered to the wavelength of the fluorescence emitted from the solution SB, wherein each bright spot in the captured image corresponds to a microwell M that contains the solution SB. The fluorescent images A, C, E, G, and I illustrated in FIG. 14 are images captured in Step 1, and the fluorescent images B, D, F, H, and J illustrated in FIG. 14 are images captured in Step 4. As illustrated in the fluorescent images A, C, E, G, and I, it is indicated that in Step 1, each microwell M contains the solution SA, but does not contain the solution SB. As illustrated in the fluorescent images B, D, F, H, and J, it is indicated that in Step 4, each microwell M contains the solution SB, but does not contain the solution SA.

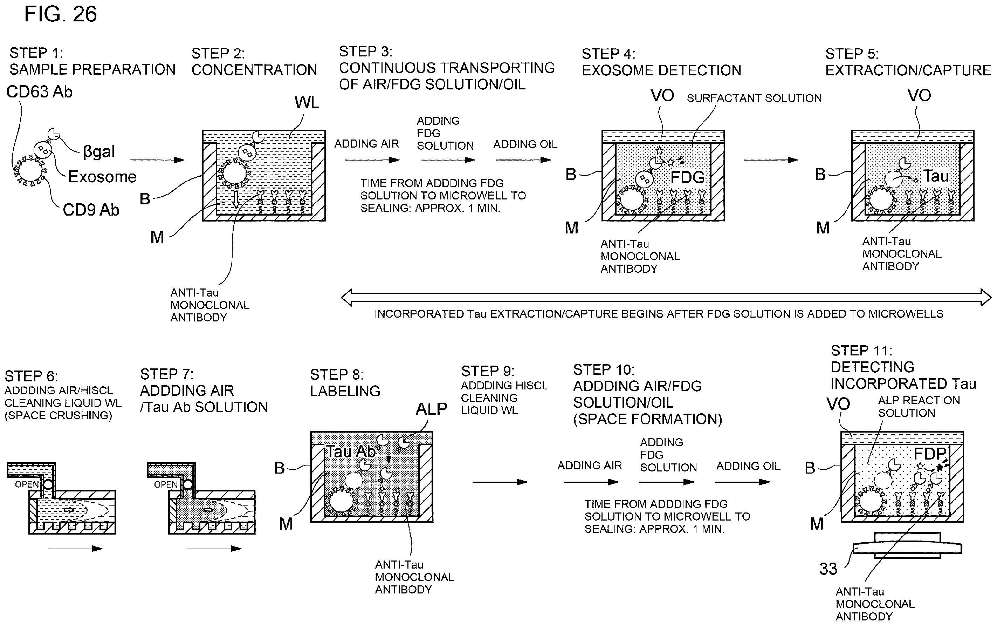

FIG. 15 is a graph illustrating the fluorescence intensity of the A488ch fluorescence images and the A647ch fluorescence images. From this graph, it can be seen that in the odd-numbered rounds (i.e., Rounds 1, 3, 5, 7, and 9) in which the three-phase plug of air/A488 solution/oil VO is transported, the fluorescence intensity emitted from the solution SA is strong, and the fluorescence intensity emitted from the solution SB is almost zero. To the contrary, it can be seen that in the even rounds (i.e., Rounds 2, 4, 6, 8, and 10) in which the three-phase plug of air/A647 solution/oil VO is transported, the fluorescence intensity emitted from the solution SB is strong and the fluorescence intensity emitted from the solution SA is almost zero. In other words, from the graph of FIG. 26, it can be seen that in Step 1, each microwell M contains the solution SA but not the solution SB, and in Step 4, each microwell M contains the solution SB but not the solution SA. As illustrated in FIGS. 14 and 15, it is indicated that it is possible to continuously perform the replacement of the solution SA (A488/extraction solution) and the solution SB (A647/extraction solution) using the three-phase plug formed in the tube CB. In this Example, AE-3000 is used as the volatile oil, but similar results are obtained when FC-43 is used. FC-43 has a vapor pressure of 0.17 kPa at 25°C and a boiling point of 174°C.

<Example 2>

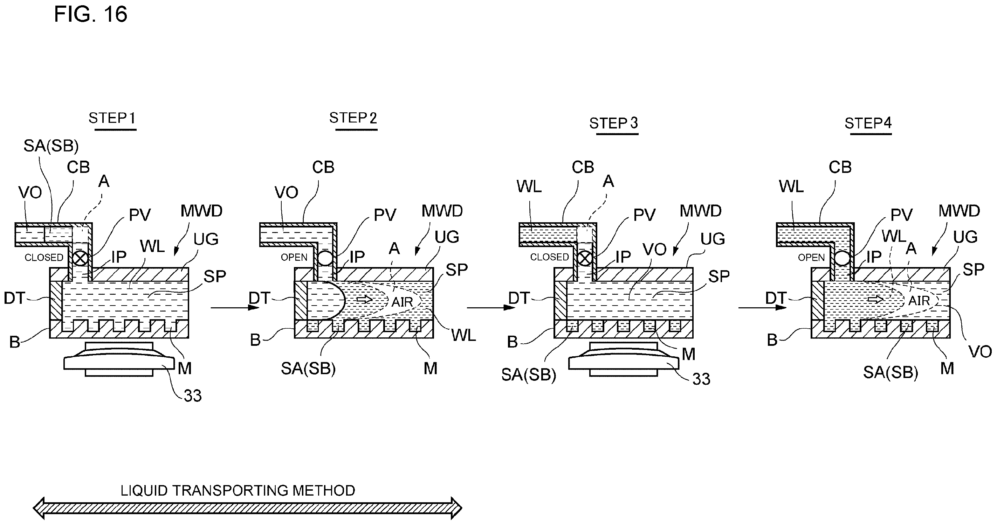

Example 2 is described with reference to FIGS. 16 to 18. In Example 2, the demonstration of solution replacement using different types of solutions is performed Specifically, in Example 2, the solution replacement is performed using a surfactant solution and an organic solvent. In Example 2, the replacement of different types of solutions is performed.

In Example 2, a closed type microwell device to which an anti-Tau monoclonal antibody is immobilized is used. Although the antibody-immobilized microwell device is used in anticipation of antigen-antibody reactions in the microwells, the reagents do not include antigens. In the closed type control system 100A illustrated in FIG. 4, an A647/ALP reaction solution is stored in the reagent A management part 16A, an A647/extraction solution is stored in the reagent C management part 16C, and a fluorescein/HISCL Washing Solution is stored in the storage tank 14. The volatile oil used is AE-3000.

FIG. 16 is a diagram illustrating a schematic view of a flow of Example 2. The fluorescein/HISCL Washing Solution WL is introduced into the space SP in the microwell device MWD so that the space SP and each microwell M are filled with the washing solution WL, after which the microwell device MWD is imaged by the microscope 33 to obtain a fluorescent image A (Step 1). A three-phase plug (the air A, the A647/extraction solution (solution SA), and the oil VO arranged from the front in the flow direction) is formed in the tube CB and transferred to the microwell device MWD. As a result, the cleaning liquid WL in the space SP is replaced with the air A, and the solution SA is introduced into the space SP where the cleaning liquid WL has been replaced with the air A, so that the cleaning liquid WL is replaced with the solution SA in the microwells M, and the solution SA is sealed with the oil VO (Step 2). After the solution SA is filled in the microwells M and sealed with the oil VO, the microwell device MWD is imaged by the microscope 33 to obtain a fluorescent image B (Step 3).

Next, a two-phase plug (the air A and the fluorescein/HISCL Washing Solution WL arranged from the front in the flow direction) is formed in the tube CB, and the two-phase plug is transferred to the microwell device MWD and introduced into the space SP. As a result, the oil VO in the space SP is replaced with the air A, and the cleaning liquid WL is introduced into the space SP where the oil VO has been replaced with the air A, replacing the solution SA in each microwell M with the cleaning liquid WL (Step 4).

Next, Steps 1 to 4 are carried out using the A647/ALP reaction solution (solution SB) instead of the A647/extract solution. After the cleaning liquid WL is filled in the space SP and the cleaning liquid WL is also accommodated in the microwells M, the microwell device MWD is imaged by the microscope 33 to obtain a fluorescent image C (Step 1). Next, a three-phase plug (the air A, the A647/ALP reaction solution (solution SB), and the oil VO arranged from the front in the flow direction) is formed in the tube CB and transferred to the microwell device MWD. As a result, the cleaning liquid WL in the space SP is replaced with the air A, and the solution SB is introduced into the space SP where the cleaning liquid WL has been replaced with the air A, replacing the cleaning liquid WL in the microwells M with the solution SB, and the solution SB is sealed with the oil VO (Steps 2 and 3). After the solution SB is contained in the microwells M and sealed with the oil VO, the microwell device MWD is imaged by the microscope 33 to obtain a fluorescent image D (Step 4).

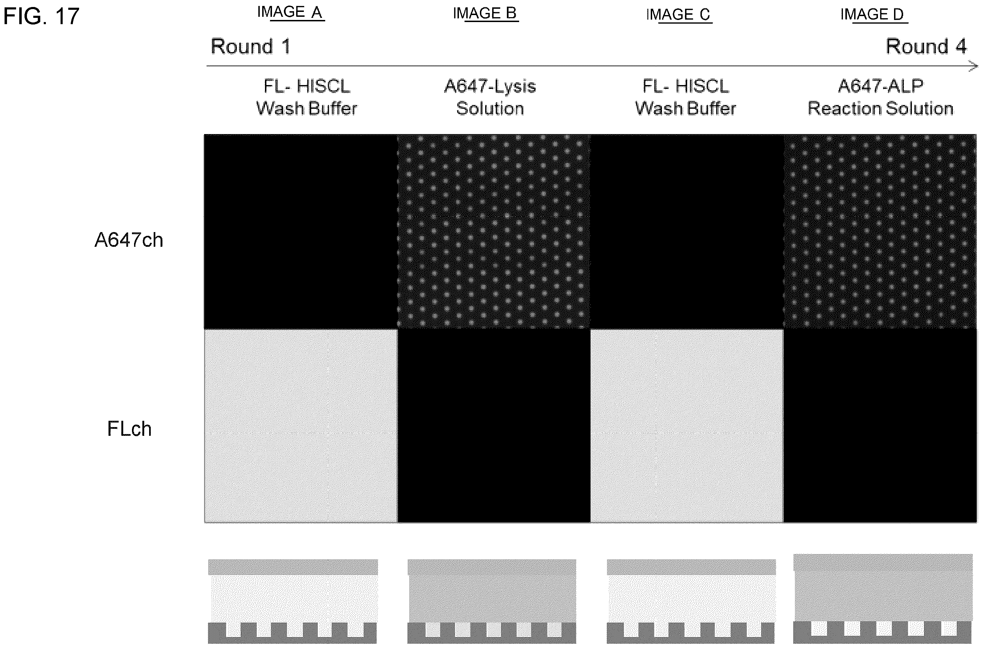

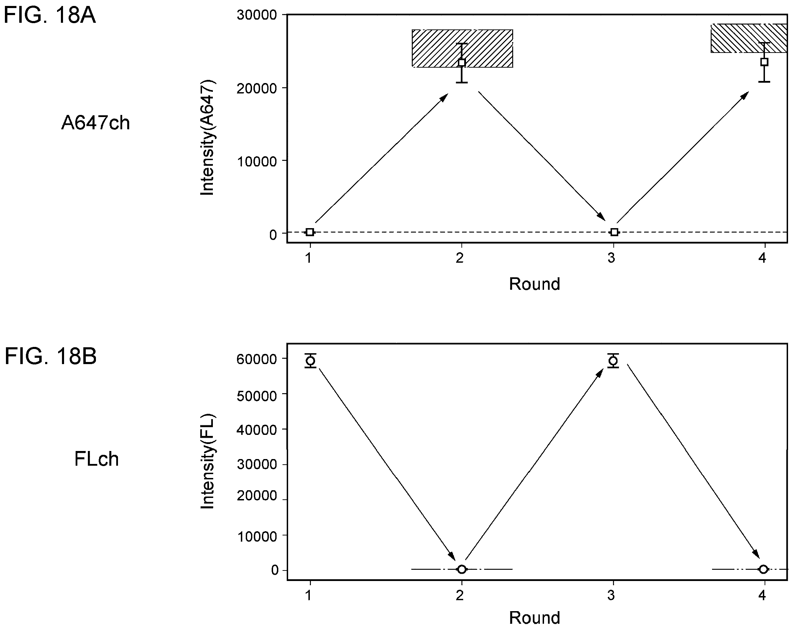

With reference to FIGS. 17 and 18, experiment results of Example 2 are described below. FIG. 17 is a diagram illustrating examples of the fluorescent images A to D. As illustrated in FIG. 17, in the images A and C, there are no bright spots in the A647ch fluorescence images, and the fluorescence intensity is high overall in the FLch fluorescence images. This indicates, in Step 1 in which the images A and C are captured, the solution SA and the solution SB are not present in each microwell M, and the cleaning liquid WL is filled in each microwell M. As illustrated in FIG. 17, in the images B and D, bright spots corresponding to the microwells M are present in the A647ch fluorescence images, whereas no fluorescence is detected overall in the FLch fluorescence images. This indicates that in Step 3 in which the images B and D are captured, each microwell M is filled with the solution SA or the solution SB, and no cleaning liquid WL is present in each microwell M. FIGS. 18A and 18B are graphs illustrating the fluorescence intensity in the A647ch fluorescence images and the FLch fluorescence images. As illustrated in FIG. 18A and 18B, in Step 1 corresponding to Rounds 1 and 3, the fluorescence intensity from the solutions SA and SB is almost zero, and the fluorescence intensity from the cleaning liquid WL is high. In addition, in Step 3 corresponding to Rounds 2 and 4, the fluorescence intensity from the solutions SA and SB is high, and the fluorescence intensity from the cleaning liquid WL is approximately zero. From this, it can be seen that in Step 1, neither the solution SA nor the solution SB is present in each microwell M and each microwell M is filled with the cleaning liquid WL, and in steps 3 and 7, each microwell M is filled with the solution SA or the solution SB and no cleaning liquid WL is present in each microwell M. As illustrated in FIGS. 17 and 18, it is indicated that highly accurate solution replacement is possible even for the solutions with different compositions, such as the A647/extraction solution (solution SA) and the A647/reaction solution (solution SB).

<Example 3>

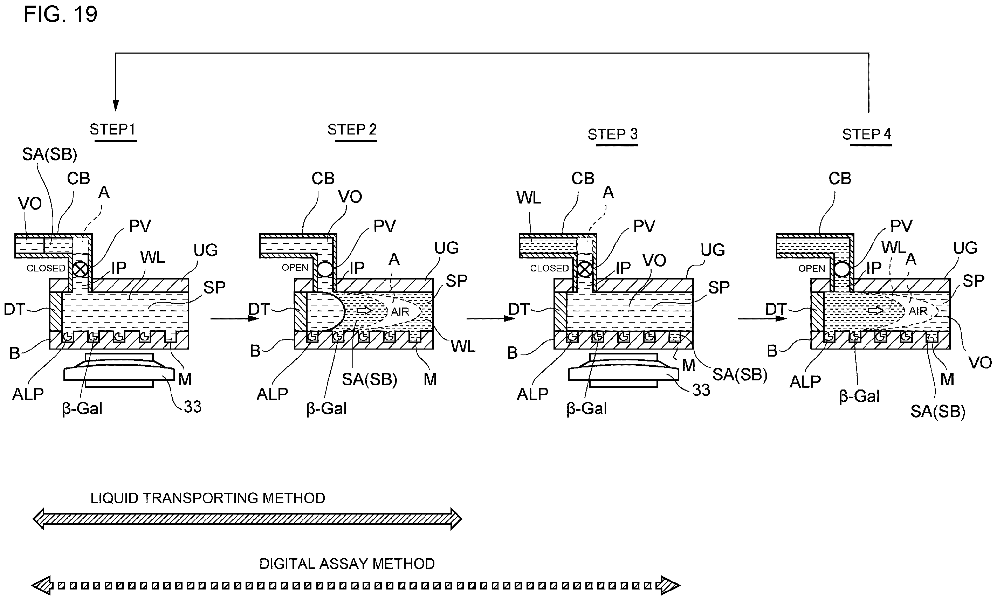

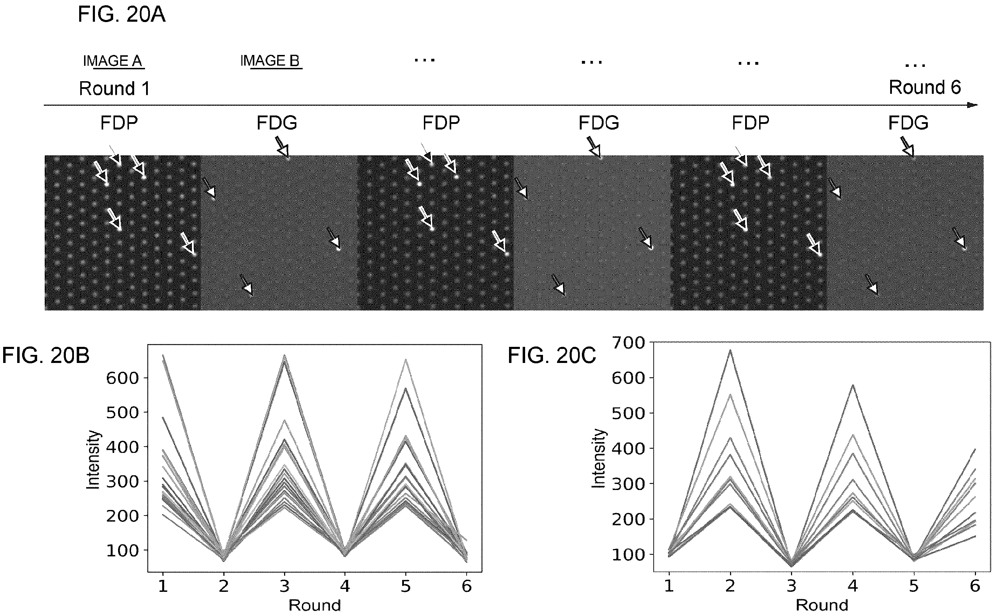

Example 3 is described with reference to FIGS. 19 and 20. In Example 3, solution replacement is carried out using substrate solutions of different enzymes (enzymatic reactions in microwells using different enzymes). Specifically, in Example 3, continuous single molecule detection is carried out using an ALP and a β-Gal. In the closed type control system 100A illustrated in FIG. 4, an ALP fluorescent substrate solution is stored in the reagent A management part 16A, a β-Gal fluorescent substrate solution is stored in the reagent B management part 16B, and HISCL Washing Solution is stored in the storage tank 14. In Example 3, the closed type microwell device in which two types of enzymes are immobilized is used.

FIG. 19 is a diagram illustrating a schematic view of a flow of Example 3. In the microwell device MWD with a plurality of microwells M to which the ALP is immobilized and another plurality of microwells M to which the β-Gal is immobilized, the space SP and each microwells M are filled with the fluorescein/HISCL Washing Solution WL. A three-phase plug (the air A, the ALP fluorescent substrate solution (solution SA), and the oil VO arranged from the front in the flow direction) is formed in the tube CB (Step 1). The pinch valve PV is controlled to be in the open state, and the three-phase plug formed in Step 1 is transported to the microwell device MWD (Step 2). As a result, each microwell M is filled with the solution SA and sealed with the oil VO (Step 3). Then, the ALP immobilized in the microwell M and the ALP fluorescent substrate (FDP: Substrate for ALP) contained in the solution SA accommodated in the microwell M are reacted with each other, and after the reaction, the microwell device is imaged with the microscope 33 to obtain a fluorescent image A (Step 3).

After a two-phase plug (the air A and the HISCL cleaning solution WL arranged from the front in the flow direction) is formed in the tube CB, the pinch valve PV is controlled to be in the open state and the formed three-phase plug is transported to the microwell device MWD (Step 4). This causes the space SP and each microwell M to be filled with the cleaning liquid WL (Step 1). Next, a three-phase plug (the air A, the β-Gal fluorescent substrate solution (solution SB), and the oil VO arranged from the front in the flow direction) is formed in the tube CB, the pinch valve PV is controlled to the open state, and then the three-phase plug is transported to the microwell device MWD (Step 2). As a result, the solution SB is accommodated in the microwells M and is sealed with the oil VO (Step 3). Thereafter, the β-Gal fixed in the microwell M reacts with the β-Gal fluorescent substrate (FDG: Substrate for β-Gal) accommodated in the microwell M, and after the reaction, the microwell device is imaged with the microscope 33 to obtain a fluorescent image B (Step 3). Next, a two-phase plug (an air A and HISCL Washing Solution WL arranged from the front in the flow direction) is formed in the tube CB and transferred to the microwell device MWD (Step 4). Such a cycle of Steps 1 to 4 is repeatedly executed.

FIG. 20A to 20C are diagrams illustrating experimental results of Example 3. FIG. 20A is a diagram illustrating examples of fluorescent images A acquired in Step 1 in FIG 19 and fluorescent images B acquired in Step 3 in FIG 19. FIG. 20B is a diagram illustrating examples of a fluorescence intensity of a microwell in which the ALP is detected (each line corresponds to a bright spot in each of microwells). FIG. 20C is a diagram illustrating examples of a fluorescence intensity of a microwell in which the β-Gal is detected (each line corresponds to a bright spot in each of microwells). As illustrated in FIGS. 20A to 20C, it is indicated that the fluorescence intensity increases in some microwells M in Step 1 where the ALP has reacted with the fluorescent substrate, and the fluorescence intensity increases in other microwells M in Step 3 where the β-Gal has reacted with the fluorescent substrate. That is, in Example 3, it is indicated that the continuous single molecule detection of the ALP and the β-Gal is possible.


<Example 4>


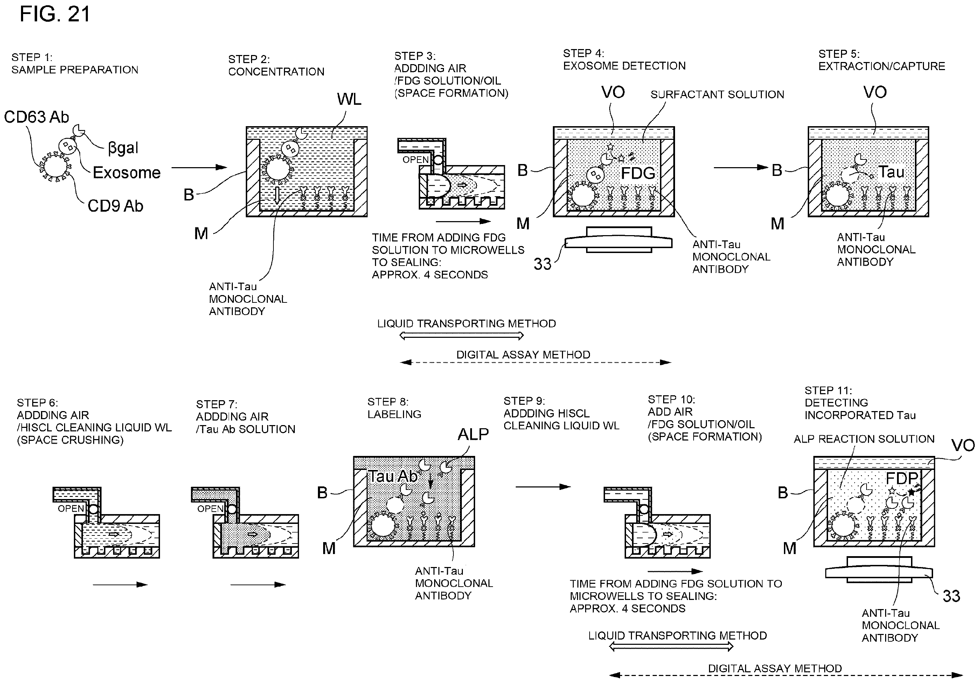

Example 4 is described with reference to FIGS. 21 to 24. In Example 4, the demonstration of a single exosome analysis (detection of a single particle and quantification of particle inclusions) is performed. Specifically, in Example 4, dependency of detection of an exosome-incorporated Tau on an addition amount of exosomes is examined. In the closed type control system 100A illustrated in FIG. 4, an ALP fluorescent substrate solution (containing dye) is stored in the reagent A management part 16A, an ALP-labeled anti-Tau antibody solution is stored in the reagent B management part 16B, a β-Gal fluorescent substrate/extraction solution (containing dye) is stored in the reagent C management part 16C, and HISCL Washing Solution is stored in the storage tank 14. In Example 4, the closed type microwell device to which an anti-Tau monoclonal antibody is immobilized is used. In addition, a prepared sample containing a volatile oil (AE-3000) and a magnetic particle-exosome-β-Gal complex is used.

FIG. 21 is a diagram illustrating a schematic view of a flow of Example 4. In FIG. 21, for ease of explanation, in some steps, only one of the plurality of microwells M is illustrated in an enlarged manner. As illustrated in FIG. 21, the sample (magnetic particle, exosome, and immune complex of β-Gal-labeled antibody) is prepared and added to the microwell device MWD (Step 1). By bringing a magnet (not illustrated) close to the microwells M, the immune complex containing the magnetic particle moves in a direction approaching the magnet. That is, a concentration (magnetic collection) step is carried out on the sample contained in the microwells M. In order to cause the immune complexes to remain within the microwells M, the magnetic collection is continued in each of steps 2 to 11 except for Step 4 (Step 2). A three-phase plug (the air A, the β-Gal fluorescent substrate/extraction solution, and the oil VO arranged from the front in the flow direction) is formed in the tube CB and transferred to the microwell device MWD. As a result, each microwell M is filled with the β-Gal fluorescent substrate/extraction solution and sealed with the oil VO. Here, the time t from when the solution is added to the microwells M until the solution is sealed with the oil VO is, for example, approximately 4 seconds. Furthermore, in the microwell M where the immune complex is attracted, the β-Gal reacts with the fluorescent substrate and emits fluorescence (Step 3).

The microwell device is imaged by the microscope 33 to obtain a fluorescent image A and a fluorescent image B (Step 4). Next, extraction and capture of the exosome-incorporated Tau (exosomal Tau) are performed. That is, the exosome-incorporated Tau is extracted from the exosome by the action of the surfactant contained in the β-Gal fluorescent substrate/extraction solution, and the extracted exosome-incorporated Tau is captured by the anti-Tau monoclonal antibody immobilized in the microwell M (Step 5). Next, a two-phase plug (the air A and HISCL Washing Solution WL arranged from the front in the flow direction) is formed in the tube CB and transferred to the microwell device MWD (space disruption). This causes the space SP and each microwell M to be filled with the cleaning liquid WL (Step 6). Next, a two-phase plug (the air A and the ALP-labeled anti-Tau antibody solution arranged from the front in the flow direction) is formed and transferred to the microwell device MWD. As a result, the space SP and each microwell M are filled with the ALP-labeled anti-Tau antibody solution (Step 7). In the microwell M where the immune complex is collected, the ALP labeling of the exosome-incorporated Tau is carried out through the antigen-antibody reaction (Step 8).

Next, HISCL Washing Solution WL is transferred to the microwell device MWD. This causes the space SP and each microwell M to be filled with the cleaning liquid WL (Step 9). A three-phase plug (the air A, the ALP fluorescent substrate solution, and the oil VO arranged from the front in the flow direction) is formed in the tube CB and transferred to the microwell device MWD. As a result, each microwell M is filled with the ALP fluorescent substrate solution and sealed with the oil VO. Further, in the microwell M where the immune complex is collected, the ALP label reacts with the fluorescent substrate and emits fluorescence (Step 10). The microwell device MWD is imaged by the microscope 33 to obtain a fluorescent image C (Step 11).

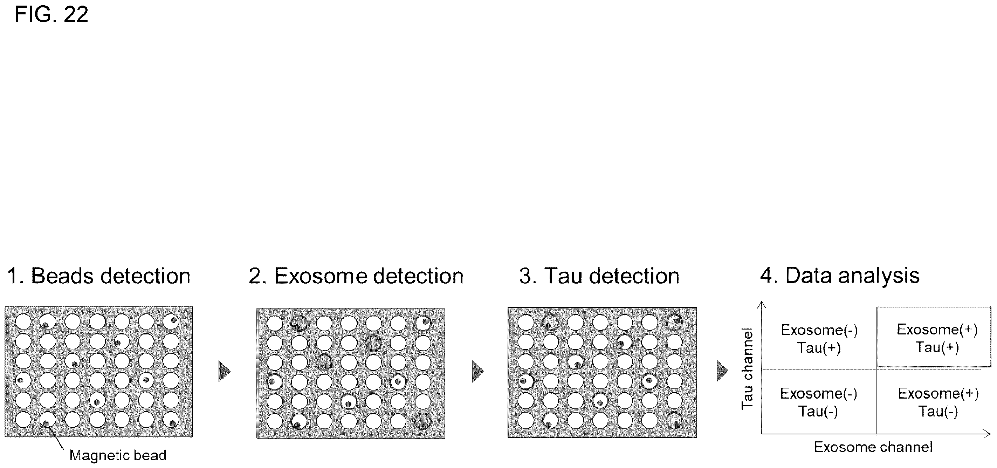

FIG. 22 is a diagram illustrating a schematic view of an analysis flow of Example 4. As illustrated in FIG. 22, the analysis flow of Example 4 includes the following four steps. The analysis flow of Example 4 includes "Beads detection," "Exosome detection," "Tau detection," and "Data analysis" in this order. "Beads detection" is a process of identifying the microwell M in which the immune complex is attracted, based on the fluorescent image captured in Step 4. "Exosome detection" is a process of determining the intensity of fluorescence emitted from each microwell M that is identified in "Beads detection" based on the fluorescent image captured in Step 4. "Tau detection" is a process of determining the intensity of fluorescence emitted from each of the microwells M identified in "Beads detection" based on the fluorescent image captured in Step 11. "Data analysis" is a process of plotting on a scatter diagram for each microwell M that is identified in "Beads detection" based on the fluorescence intensity of the fluorescence image in Step 4 and the fluorescence intensity of the fluorescence image in Step 11. When this scatter plot is divided into four, the microwell that is plotted in an upper left region indicates that the exosome is not detected but the exosome-incorporated Tau is detected, the microwell that is plotted in an upper right region indicates that both the exosome and the exosome-incorporated Tau are detected, the microwell that is plotted in a lower left region indicates that neither the exosome nor the exosome-incorporated Tau are detected, and the microwell that is plotted in a lower right region indicates that the exosome is detected but the exosome-incorporated Tau is not detected.

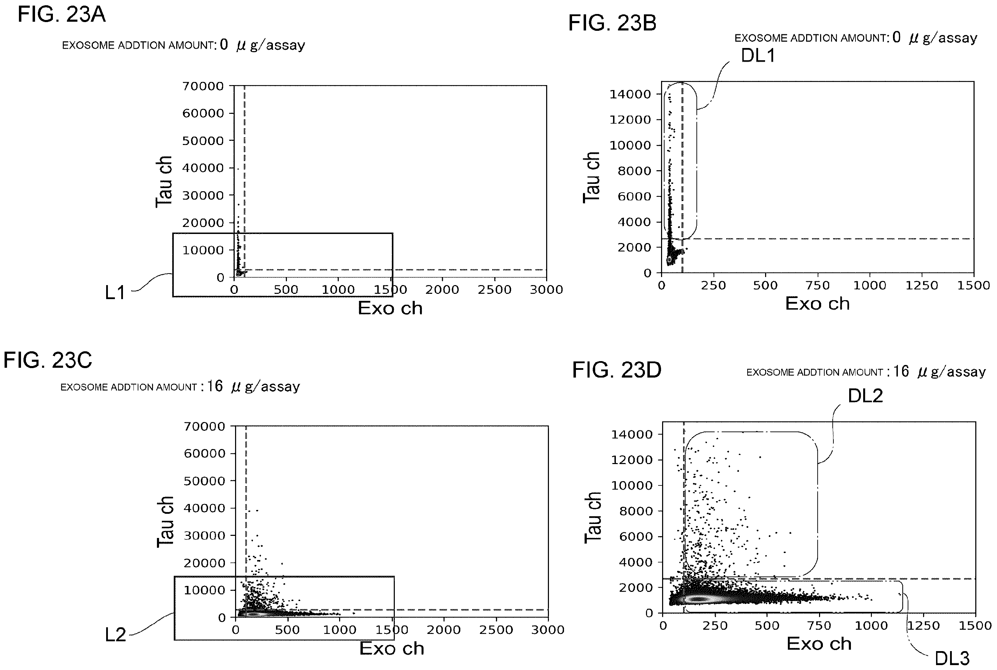

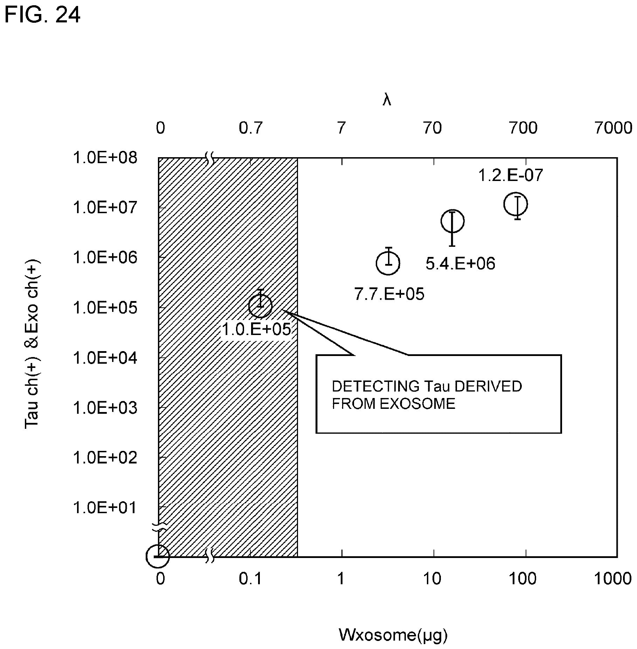

FIGS. 23 and 24 are diagrams illustrating experimental results of Example 4. The horizontal axis in FIGS. 23A to 23D indicates the fluorescence intensity upon detection of the exosome (fluorescence intensity obtained by "Exosome detection"), and the vertical axis in FIGS. 23 A to 23D indicates the fluorescence intensity upon detection of the Tau (fluorescence intensity obtained by "Tau detection"). Figures 23A and 23B illustrate the detection results when Steps 2 to 11 are performed using the sample prepared in Step 1 in FIG. 21 without containing exosomes, and FIGS. 23C and 23D illustrate the detection results when Steps 2 to 11 are performed using the sample prepared in Step 1 in FIG. 21 containing 16 μg of exosomes per sample. FIG. 23B is an enlarged view of a portion enclosed by the solid line L1 in FIG. 23A, and FIG. 23D is an enlarged view of a portion enclosed by the solid line L2 in FIG. 23C. As illustrated in FIG. 23B, in the sample prepared with no exosome, most of the plots are located in the lower left region, indicating that almost no false positives occurs. The plots in the upper left region are thought to be due to the influence of the ALP-labeled antibody nonspecifically adsorbed to the microwell. Moreover, as illustrated in FIG. 23D, in the sample prepared with containing the exosomes, many plots are present in the lower right region, indicating that the exosomes contained in the sample are detected. There are also plots in the upper right region, indicating that the exosome-incorporated Tau is also detected. In addition, since all of the exosome-incorporated Tau is not necessarily encapsulated in the exosomes, it is thought that the number of plots in the upper right region is fewer than the number of plots in the lower right region.

FIG. 24 is a diagram illustrating experimental results in which the average number ($\lambda$) of the exosomes captured by the magnetic particle is changed in sample preparation in Step 1, and Steps 2 to 11 and the analysis flow of Example 4 are performed. In the experimental results, the number of Tau ch(+)&Exo ch(+) with $\lambda$ of approximately 0.7 (i.e., the number of plots located in the upper right region in the scatter diagram of "Data analysis" in FIG. 22) is $1 \times 10^5$. This indicates that the exosome-incorporated Tau is detected from the immune complex in which only one exosome is captured. In other words, Example 4 indicates that the single exosome analysis can be realized.

<Example 5 and comparative example>

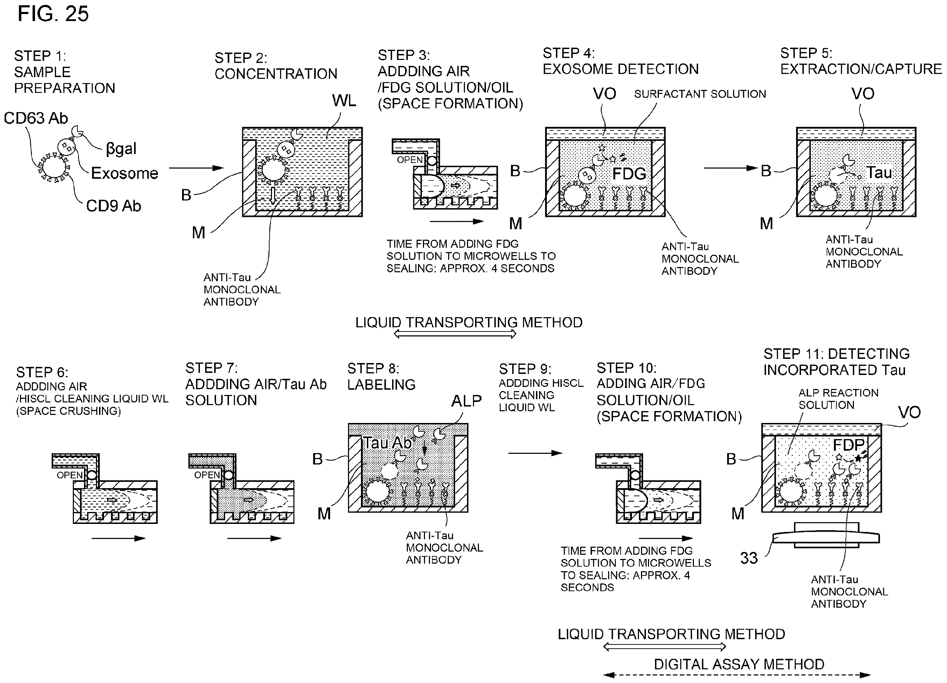

With reference to FIGS. 25 to 28, Example 5 and a comparative example with respect to Example 5 are described below. In Example 5, a multiphase plug is formed, and an exosome-encapsulated Tau is measured by a multiphase plug transporting method in which the formed multiphase plug is transported. On the other hand, in the comparative example, an exosome-encapsulated Tau is measured using a liquid transporting method in which each type of fluid is transported sequentially one by one without forming a multiphase plug. Specifically, in Example 5, the dependency of detection of the exosome-incorporated Tau on the addition amount of exosomes is examined. In the closed type control system 100A illustrated in FIG. 4, an ALP fluorescent substrate solution (containing dye) is stored in the reagent A management section 16A, an ALP-labeled anti-Tau antibody solution is stored in the reagent B management section 16B, a β-Gal fluorescent substrate/extraction solution (containing dye) is stored in the reagent C management section 16C, and HISCL Washing Solution is stored in the storage tank 14. In Example 5, the closed type microwell device to which an anti-Tau monoclonal antibody is immobilized is used. In addition, a prepared sample containing a volatile oil (AE-3000) and a magnetic particle-exosome-β-Gal complex is used.

FIG. 25 is a diagram illustrating a schematic view of a flow of Example 5. In Step 4 of Example 4 illustrated in FIG. 21, the fluorescent image B is obtained by imaging the microwell device with the microscope 33, whereas in the flow of Example 5 illustrated in FIG. 25, a fluorescent image is not obtained in Step 4. However, the rest of the steps in Example 5 are generally the same as in Example 4, and therefore a detailed description of each step of the flow of Example 5 will be omitted. In steps 3 and 10 of Example 5, the time t from when the microwell M is filled with the β-Gal fluorescent substrate/extraction solution to when it is sealed with oil VO is approximately 4 seconds.

FIG. 26 is a diagram illustrating a schematic view of a flow of the comparative example with respect to Example 5.

In Steps 3 and 10 of Example 5 illustrated in FIG. 25, a multiphase plug containing the air the FDG (FDP) solution, and the oil is formed and transported, whereas in the flow of the comparative example illustrated in FIG. 26, a multiphase plug is not formed in Steps 3 and 10, and the air, the FDG (FDP) solution, and the oil are transported sequentially. The steps except for Steps 3 and 10 in the comparative example are the same as in Example 5. The following particularly describes points that differ from Example 5.

In Step 3 of the comparative example illustrated in FIG. 26, the air A is first transported to the microwell device MWD, then the β-Gal fluorescent substrate/extraction solution is transported to the microwell device MWD, and the oil VO is finally transported to the microwell device MWD. As a result, each microwell M is filled with the β-Gal fluorescent substrate/extraction solution and sealed with the oil VO. Here, the time t from when the microwell M is filled with the β-Gal fluorescent substrate/extraction solution to when it is sealed with the oil VO is approximately 1 minute. In Step 10 of the comparative example illustrated in FIG. 26, the air A is first transported to the microwell device MWD, then the ALP fluorescent substrate solution is transported to the microwell device MWD, and the oil VO is finally transported to the microwell device MWD. As a result, each microwell M is filled with the ALP fluorescent substrate solution and sealed with the oil VO. Here, the time t from when the microwell M is filled with the ALP fluorescent substrate solution to when it is sealed with the oil VO is approximately 1 minute.

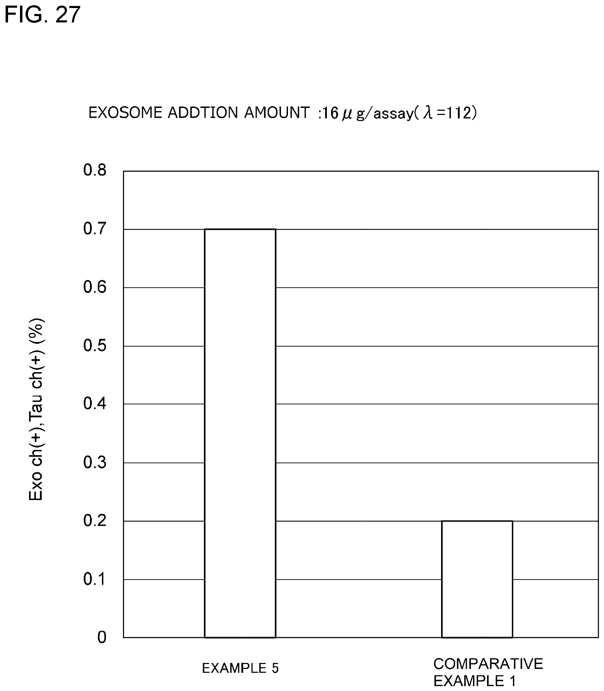

FIG. 27 is a diagram illustrating comparison results between Example 5 and the comparative example with respect to Example 5. FIG. 27 illustrates detection results of Example 5 and the comparative example when the sample prepared with containing 16 μg of exosomes per sample in the sample preparation in Step 1 of Example 5 in FIG. 25 and in Step 1 of the comparative example in FIG. 26 and then Steps 2 to 11 are performed. Here, the average amount of exosomes captured per magnetic particle, λ, is "112". The vertical axis in FIG. 27 illustrates the percentage of exosome-positive (Exo ch(+)) and Tau-positive (Tau ch(+)) wells relative to the number of detected magnetic particles. It can be seen that in Example 5, the number of exosome-positive wells (Exo ch(+)) and Tau-positive wells (Tau ch(+)) increased compared to the comparative example. In other words, by sealing the microwell M in a short time after the microwell M is filled with the FDG solution, it is possible to capture in the microwell the Tau that is extracted from the exosome.

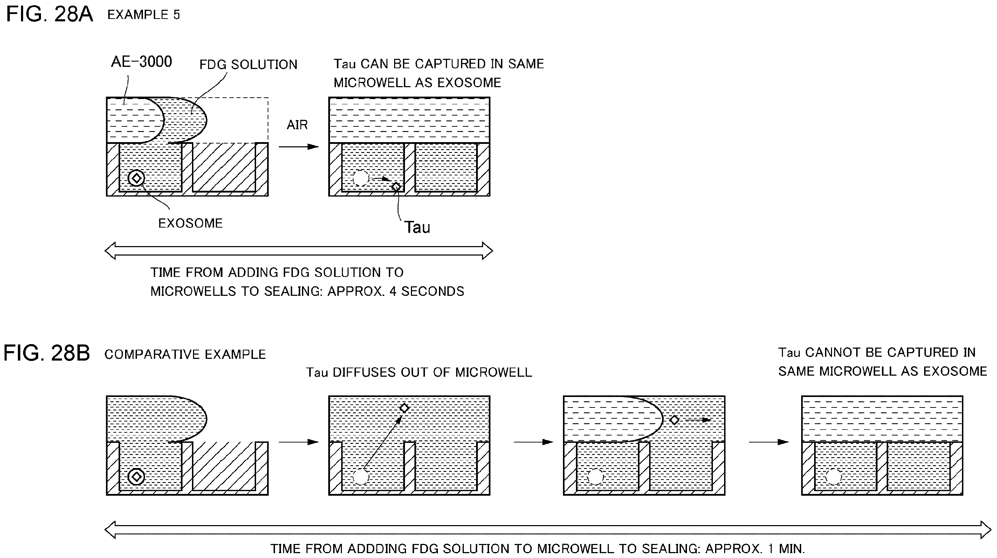

FIGS. 28A and 28B are diagrams illustrating predictions from the results of comparison between Example 5 and the comparative example. FIG. 28A is a diagram illustrating examples of states inside the microwell device according to Example 5. FIG. 28B is a diagram illustrating examples of states inside the microwell device according to the comparative example. As illustrated in FIG. 28 A, in Example 5, by setting the time from when the microwell M is filled with the FDG solution to when it is sealed to 4 seconds or less, it is considered that the Tau can be captured in the same microwell M as the exosome. On the other hand, as illustrated in FIG. 28B, in the comparative example, by setting the time from when the microwell M is filled with the FDG solution to when it is sealed to about 1 minute, it is considered that the number of cases where the Tau cannot be captured in the same microwell M as the exosome increases.

<Other embodiments>

One or more embodiments described above are intended to facilitate understanding of the invention and should not be understood to limit the invention. One or more embodiments may be changed and modified (for example, embodiments may be combined, or part of the configuration of each embodiment may be omitted) without departing from the scope of the invention. In addition, one or more embodiments include equivalents thereof.

As a supplementary note, to a liquid transporting method, a digital assay method, and a digital assay apparatus according to an embodiment are summarized below.

A liquid transporting method according to an embodiment may be a liquid transporting method of transferring a liquid to a device in which a plurality of microwells formed on a substrate. The liquid transporting method may include: forming a multiphase plug in advance, in a position different from the device, the multiphase plug including: a solution for filling the plurality of microwells; and an immiscible liquid that is immiscible with the solution for sealing the plurality of microwells filled with the solution, and the solution and the immiscible liquid being arranged in the recited order from a front in a flow direction; and transporting the multiphase plug to the device.

In the liquid transporting method,

the device may be formed with the substrate on which the plurality of microwells are formed and a second substrate provided above the substrate such that a space is formed between the substrate and the second substrate, and the transporting of the multiphase plug to the device may comprise transporting the multiphase plug to the space of the device.

In the liquid transporting method, the transporting of the multiphase plug to the space of the device may cause each of the plurality of microwells to be filled with the solution, and then to be sealed with the immiscible liquid.

In the liquid transporting method,

a volume of the solution in the multiphase plug may be set based on a time length from a time when a predetermined microwell of the plurality of microwells is filled with the solution to a time when the predetermined microwell is sealed with the immiscible liquid.

In the liquid transporting method,

the volume (V) of the solution may be set substantially according to the following formula:

$$V = S \times v \times t,$$

where "S" is a cross-sectional area in the space in the liquid transporting direction, "v" is a flow velocity of the multiphase plug, and "t" is a time length from when the plurality of microwells are filled with the solution to when the plurality of microwells are sealed with the immiscible liquid.

In the liquid transporting method,
the time length "t" may be equal to or less than 4 seconds.
In the liquid transporting method,
the time length "t" may be equal to or less than 1 second.
In the liquid transporting method,
a volume of the immiscible liquid in the multiphase plug may be equal to or greater than a volume of the space in the device.
In the liquid transporting method,
the multiphase plug may include a multiphase plug in which an air, the solution, and the immiscible liquid are arranged in the recited order from the front in the flow direction.
In the liquid transporting method,
the position different from the device may include a predetermined position in a tube connected to a liquid transporting port of the device.
In the liquid transporting method,
the forming of the multiphase plug may include: introducing the immiscible liquid into the tube; and replacing a front part, in the flow direction, of the introduced immiscible liquid with the solution.
In the liquid transporting method,
the forming of the multiphase plug may further include replacing a front part, in the flow direction, of the solution that has been introduced to replace the immiscible liquid, with an air.
In the liquid transporting method,
the immiscible liquid may be an oil having a vapor pressure of 0.15 kPa or more at 25 °C.
A digital assay method according to an embodiment may be a digital assay method of performing a digital assay using a device in which a plurality of microwells are formed on a substrate. The digital assay method may include:

forming a multiphase plug in advance, in a position different from the device, the multiphase plug including: a solution for filling the plurality of microwells; and an immiscible liquid that is immiscible with the solution for sealing the plurality of microwells filled with the solution, and the solution and the immiscible liquid being arranged in the recited order from a front in a flow direction; and
transporting the multiphase plug to the device; and
performing a digital assay in the plurality of microwells that are filled with the solution and sealed with the immiscible liquid by the transporting of the multiphase plug.

The digital assay method may further include:

introducing bioparticles into the microwells, prior to the transporting of the multiphase plug to the device, wherein the solution may include a substance for detecting surface molecules of the particles, and
the digital assay may be an assay for detecting the surface molecules of the particles.

The digital assay method may further include:

introducing bioparticles into the microwells, prior to the transporting of the multiphase plug to the device;
forming a first multiphase plug in advance at a position different from the device, the first multiphase plug including the solution that includes a substance for detecting surface molecules of the particles and a substance for destroying the particles;
transporting the first multiphase plug to the device; and

performing a first assay to detect the surface molecules of the particles in the microwells;
forming a second multiphase plug in advance at a position different from the device, the second multiphase plug including the solution that includes a substance for detecting inclusions of the particles;
transporting the second multiphase plug to the device; and
performing a second assay to detect the inclusions of the particles in the microwells.

In the digital assay method,
the multiphase plug may include a multiphase plug in which an air, the solution, and the immiscible liquid are arranged in the recited order from the front in the flow direction.

In the digital assay method,
the position different from the device may include a predetermined position in a tube connected to a liquid transporting port of the device.

In the digital assay method,
the immiscible liquid may be an oil having a vapor pressure of 0.15 kPa or more at 25 °C.

A digital assay apparatus according to an embodiment may be a digital assay apparatus of performing a digital assay. The digital assay apparatus may include:

a device in which a plurality of microwells formed on a substrate;
a fluid management part connected to a liquid transporting port of the device, configured to form, at a position different from the device, a multiphase plug in which a solution for filling the plurality of microwells and an immiscible liquid that is immiscible with the solution for sealing the plurality of microwells filled with the solution are arranged in the recited order from a front in a flow direction, and configured to transport the multiphase plug to the device; and
a detector configured to detect assay analytes in the plurality of microwells that is filed with the solution and sealed with the immiscible liquid by the transporting of the multiphase plug.

In the digital assay apparatus,
the fluid management part may include a tube and is configured to introduce the immiscible liquid into the tube, and replace a front part, in the flow direction, of the introduced immiscible liquid with the solution.

In the digital assay apparatus,
the fluid management part may be further configured to replace a front part, in the flow direction, of the solution that is introduced into the tube to replace the immiscible liquid, with an air.

In the digital assay apparatus
the fluid management part may include a solution management part configured to manage the solution, an immiscible liquid management part configured to manage the immiscible liquid, a tube connected to the solution management part and the immiscible liquid management part, and a pump configured to inject the solution in the solution management part and the immiscible liquid in the immiscible liquid management part into the tube.

**Claims**

1. A liquid transporting method of transferring a liquid to a device in which a plurality of microwells formed on a substrate, comprising:

   forming a multiphase plug in advance, in a position different from the device, the multiphase plug including: a solution for filling the plurality of microwells; and an immiscible liquid that is immiscible with the solution for sealing the plurality of microwells filled with the solution, and the solution and the immiscible liquid being arranged in the recited order from a front in a flow direction; and
   transporting the multiphase plug to the device.

2. The liquid transporting method according to claim 1, wherein

   the device is formed with the substrate on which the plurality of microwells are formed and a second substrate provided above the substrate such that a space is formed between the substrate and the second substrate, and
   the transporting of the multiphase plug to the device comprises transporting the multiphase plug to the space of the device.

3. The liquid transporting method according to claim 2, wherein
   the transporting of the multiphase plug to the space of the device causes each of the plurality of microwells to be filled with the solution, and then to be sealed with the immiscible liquid.

4. The liquid transporting method according to claim 1, wherein
   a volume of the solution in the multiphase plug is set based on a time length from a time when a predetermined microwell of the plurality of microwells is filled with the solution to a time when the predetermined microwell is sealed with the immiscible liquid.

5. The liquid transporting method according to claim 4, wherein

   the volume (V) of the solution is set substantially according to the following formula:

   $$V = S \times v \times t,$$

   where "S" is a cross-sectional area in the space in the liquid transporting direction, "v" is a flow velocity of the multiphase plug, and "t" is a time length from when the plurality of microwells are filled with the solution to when the plurality of microwells are sealed with the immiscible liquid.

6. The liquid transporting method according to claim 5, wherein
   the time length "t" is equal to or less than 4 seconds.

7. The liquid transporting method according to claim 5, wherein
   the time length "t" is equal to or less than 1 second.

8. The liquid transporting method according to claim 2, wherein
   a volume of the immiscible liquid in the multiphase plug is equal to or greater than a volume of the space in the device.

9. The liquid transporting method according to claim 1, wherein
   the multiphase plug comprises a multiphase plug in which an air, the solution, and the immiscible liquid are arranged in the recited order from the front in the flow direction.

10. The liquid transporting method according to claim 1, wherein
    the position different from the device includes a predetermined position in a tube connected to a liquid transporting port of the device.

11. The liquid transporting method according to claim 10, wherein
    the forming of the multiphase plug comprises: introducing the immiscible liquid into the tube; and replacing a front part, in the flow direction, of the introduced immiscible liquid with the solution.

12. The liquid transporting method according to claim 11, wherein
    the forming of the multiphase plug further comprises replacing a front part, in the flow direction, of the solution that has been introduced to replace the immiscible liquid, with an air.

13. The liquid transporting method according to claim 1, wherein
    the immiscible liquid is an oil having a vapor pressure of 0.15 kPa or more at 25 °C.

14. A digital assay method of performing a digital assay using a device in which a plurality of microwells are formed on a substrate, the digital assay method comprising:

    forming a multiphase plug in advance, in a position different from the device, the multiphase plug including: a solution for filling the plurality of microwells; and an immiscible liquid that is immiscible with the solution for sealing the plurality of microwells filled with the solution, and the solution and the immiscible liquid being arranged in the recited order from a front in a flow direction; and
    transporting the multiphase plug to the device; and
    performing a digital assay in the plurality of microwells that are filled with the solution and sealed with the immiscible liquid by the transporting of the multiphase plug.

15. A digital assay apparatus of performing a digital assay, comprising:

a device in which a plurality of microwells formed on a substrate;

a fluid management part connected to a liquid transporting port of the device, configured to form, at a position different from the device, a multiphase plug in which a solution for filling the plurality of microwells and an immiscible liquid that is immiscible with the solution for sealing the plurality of microwells filled with the solution are arranged in the recited order from a front in a flow direction, and configured to transport the multiphase plug to the device; and

a detector configured to detect assay analytes in the plurality of microwells that is filed with the solution and sealed with the immiscible liquid by the transporting of the multiphase plug.

FIG. 1

STEP 1

STEP 2

STEP 3

FIG. 2

DIGITAL ASSAY

✓ CONFINE ONE PARTICLE AT A TIME IN MICROSPACE,
AND SEAL TARGET PARTICLE IN MICROSPACE

1. CONCENTRATION  2. MEASURING SURFACE ANTIGEN  3. EXTRACTION/CAPTURE  4. LABELING  5. MEASURING INCORPORATED POPROTEIN  6. LABELING  7. MEASURING INCORPORATED NUCLEIC ACID

REPEATING LABELING AND MEASURING

EP 4 537 937 A1

FIG. 3

FIG. 4

FLUID SYSTEM 1

SYRINGE PUMP 11
12
SYRINGE A (AIR)
SYRINGE B (WASH BUFFER)
13

SV

CB

OIL 15

STORAGE TANK (WASH BUFFER) 14

REAGENT C 16C
REAGENT B 16B
REAGENT A

16A

PV

C

WASTE LIQUID TANK A 18
WASTE LIQUID TANK B 19

DL

FLOW CELL 31
MICROSCOPE 33
DETECTION SYSTEM 3

CONTROL SYSTEM
PC 51
5

100A

EP 4 537 937 A1

# FIG. 5

⊗: CLOSED STATE

○: OPEN STATE

DL

STEP1

18  19

PV3  PV5

WASH BUFFER →

PV1  CB  C  PV9

31

STEP2

18  19

PV3  OIL  PV5

PV1  CB  C  PV9

31

STEP3

18  19

PV3  PV5  REAGENT

PV1  CB  C  PV9

31

STEP4

18  19

PV3  PV5  PV7  AIR

PV1  C

CB  THREE-PHASE PLUG FORMATION  PV9

31

EP 4 537 937 A1

FIG. 6

⊗ : CLOSED STATE

◯ : OPEN STATE

EP 4 537 937 A1

FIG. 7

⊗ : CLOSED STATE

○ : OPEN STATE

STEP1

STEP2

18  19

18  19

PV7

PV7  AIR

WASH
BUFFER

PV1    CB

PV9

31

PV1

CB

TWO-PHASE
PLUG

PV9

31

DL

EP 4 537 937 A1

# FIG. 8

⊗: CLOSED STATE

◯: OPEN STATE

DL

STEP1

PV1  PV7  18  19

TWO-PHASE PLUG

CB  PV9  31

STEP2

PV7  18  19

WASH BUFFER

PV1  CB  PV9  31

EP 4 537 937 A1

FIG. 9

FIG. 10

MWD

20 mm ( OR 42 mm)

3 mm ( OR 4 mm)

B

UG

E ———————————— E

EP 4 537 937 A1

FIG. 11

FIG. 12

# FIG. 13

STEP1　　　　STEP2　　　　STEP3　　　　STEP4

Biotin-Antibody
Streptavidin
Biotin-PEG Linker

LIQUID TRANSPORTING METHOD　　　　LIQUID TRANSPORTING METHOD

FIG. 14

FIG. 15A

488ch

FIG. 15B

A647ch

FIG. 16

FIG. 17

EP 4 537 937 A1

FIG. 18A

A647ch

FIG. 18B

FLch

EP 4 537 937 A1

FIG. 19

STEP 1    STEP 2    STEP 3    STEP 4

LIQUID TRANSPORTING METHOD

DIGITAL ASSAY METHOD

FIG. 20A

EP 4 537 937 A1

FIG. 20B

FIG. 20C

# FIG. 21

STEP 1:
SAMPLE PREPARATION

STEP 2:
CONCENTRATION

STEP 3:
ADDDING AIR
/FDG SOLUTION/OIL
(SPACE FORMATION)

STEP 4:
EXOSOME DETECTION

STEP 5:
EXTRACTION/CAPTURE

CD63 Ab

βgal

Exosome

CD9 Ab

B

M

WL

OPEN

TIME FROM ADDING FDG
SOLUTION TO MICROWELLS
TO SEALING:
APPROX. 4 SECONDS

VO    SURFACTANT SOLUTION

B    FDG

M

33

ANTI-Tau
MONOCLONAL
ANTIBODY

ANTI-Tau
MONOCLONAL
ANTIBODY

VO

B    Tau

M

ANTI-Tau
MONOCLONAL
ANTIBODY

LIQUID TRANSPORTING METHOD

DIGITAL ASSAY METHOD

STEP 6:
ADDDING AIR
/HISCL CLEANING LIQUID WL
(SPACE CRUSHING)

STEP 7:
ADDDING AIR
/Tau Ab SOLUTION

STEP 8:
LABELING

STEP 9:
ADDDING HISCL
CLEANING LIQUID WL

STEP 10:
ADD AIR
/FDG SOLUTION/OIL
(SPACE FORMATION)

STEP 11:
DETECTING
INCORPORATED Tau

OPEN

OPEN

ALP

B    Tau Ab

M

ANTI-Tau
MONOCLONAL
ANTIBODY

OPEN

TIME FROM ADDING FDG SOLUTION TO
MICROWELLS TO SEALING:
APPROX. 4 SECONDS

ALP REACTION SOLUTION    VO

B    FDP

M

33

ANTI-Tau
MONOCLONAL
ANTIBODY

LIQUID TRANSPORTING METHOD

DIGITAL ASSAY METHOD

EP 4 537 937 A1

FIG. 22

1. Beads detection → 2. Exosome detection → 3. Tau detection → 4. Data analysis

Magnetic bead

| | Exosome channel | |
|---|---|---|
| Exosome(-) Tau(+) | | Exosome(+) Tau(+) |
| Exosome(-) Tau(-) | | Exosome(+) Tau(-) |

Tau channel

Exosome channel

FIG. 23A

FIG. 23B

FIG. 23C

FIG. 23D

FIG. 24

FIG. 25

STEP 1:
SAMPLE
PREPARATION

CD63 Ab
βgal
Exosome
CD9 Ab

STEP 2:
CONCENTRATION

WL

B

M

ANTI-Tau
MONOCLONAL
ANTIBODY

STEP 3:
ADDING AIR
/FDG SOLUTION/OIL
(SPACE FORMATION)

OPEN

B

M

TIME FROM ADDING FDG
SOLUTION TO MICROWELLS TO
SEALING: APPROX. 4 SECONDS

STEP 4:
EXOSOME DETECTION

VO   SURFACTANT SOLUTION

B   FDG

M

ANTI-Tau
MONOCLONAL
ANTIBODY

STEP 5:
EXTRACTION/CAPTURE

VO

B   Tau

M

ANTI-Tau
MONOCLONAL
ANTIBODY

LIQUID TRANSPORTING METHOD

STEP 6:
ADDDING AIR
/HISCL CLEANING LIQUID WL
(SPACE CRUSHING)

OPEN

STEP 7:
ADDDING AIR/Tau Ab
SOLUTION

OPEN

STEP 8:
LABELING

ALP

B   Tau Ab

M

ANTI-Tau
MONOCLONAL
ANTIBODY

STEP 9:
ADDDING HISCL
CLEANING
LIQUID WL

STEP 10:
ADDING AIR/FDG
SOLUTION/OIL
(SPACE FORMATION)

TIME FROM ADDING FDG
SOLUTION TO MICROWELLS
TO SEALING: APPROX. 4
SECONDS

STEP 11: DETECTING
INCORPORATED Tau

ALP REACTION
SOLUTION
VO

B   FDP

M

33

ANTI-Tau
MONOCLONAL
ANTIBODY

LIQUID TRANSPORTING METHOD

DIGITAL ASSAY METHOD

EP 4 537 937 A1

**FIG. 26**

STEP 1:
SAMPLE PREPARATION
CD63 Ab
βgal
Exosome
CD9 Ab
B
M
ANTI-Tau
MONOCLONAL
ANTIBODY

STEP 2:
CONCENTRATION
WL

STEP 3:
CONTINUOUS TRANSPORTING
OF AIR/FDG SOLUTION/OIL
ADDING AIR    ADDING FDG SOLUTION    ADDING OIL
TIME FROM ADDDING FDG
SOLUTION TO MICROWELL TO
SEALING: APPROX. 1 MIN.

STEP 4:
EXOSOME DETECTION
VO    SURFACTANT SOLUTION
B    FDG
M
ANTI-Tau
MONOCLONAL
ANTIBODY

STEP 5:
EXTRACTION/CAPTURE
VO
B    Tau
M
ANTI-Tau
MONOCLONAL
ANTIBODY

INCORPORATED Tau EXTRACTION/CAPTURE BEGINS AFTER FDG SOLUTION IS ADDED TO MICROWELLS

STEP 6:
ADDDING AIR/HISCL
CLEANING LIQUID WL
(SPACE CRUSHING)
OPEN

STEP 7:
ADDDING AIR
/Tau Ab SOLUTION
OPEN

STEP 8:
LABELING
ALP
B    Tau Ab
M
ANTI-Tau
MONOCLONAL
ANTIBODY

STEP 9:
ADDDING HISCL
CLEANING
LIQUID WL

STEP 10:
ADDDING AIR/FDG
SOLUTION/OIL
(SPACE FORMATION)
ADDING AIR    ADDING FDG SOLUTION    ADDING OIL
TIME FROM ADDDING FDG
SOLUTION TO MICROWELL TO
SEALING: APPROX. 1 MIN.

STEP 11:
DETECTING
INCORPORATED Tau
VO    ALP REACTION SOLUTION
B    FDP
M
33
ANTI-Tau
MONOCLONAL
ANTIBODY

EP 4 537 937 A1

FIG. 27

EXOSOME ADDTION AMOUNT :16 $\mu$ g/assay( $\lambda$ =112)

## FIG. 28A   EXAMPLE 5

AE-3000   FDG SOLUTION     Tau CAN BE CAPTURED IN SAME MICROWELL AS EXOSOME

AIR

EXOSOME              Tau

TIME FROM ADDING FDG SOLUTION TO MICROWELLS TO SEALING: APPROX. 4 SECONDS

## FIG. 28B   COMPARATIVE EXAMPLE

Tau DIFFUSES OUT OF MICROWELL

Tau CANNOT BE CAPTURED IN SAME MICROWELL AS EXOSOME

TIME FROM ADDDING FDG SOLUTION TO MICROWELL TO SEALING: APPROX. 1 MIN.

Europäisches
Patentamt

European
Patent Office

Office européen
des brevets

# EUROPEAN SEARCH REPORT

Application Number

EP 24 20 5542

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/299672 A1 (SPUHLER PHILIPP [US] ET AL) 24 September 2020 (2020-09-24) * paragraph [0284] - paragraph [0343]; figures 5-7 * * paragraph [0411] - paragraph [0416] * | 1-15 | INV. B01L3/00 |
| X | US 2022/062903 A1 (SAROFIM EMAD [CH]) 3 March 2022 (2022-03-03) * paragraph [0202] - paragraph [0208]; figures 1-5 * * paragraph [0187] - paragraph [0192] * * paragraphs [0009], [0152], [0174] * | 1-15 | |
| X | US 2023/109130 A1 (DUFFY DAVID C [US] ET AL) 6 April 2023 (2023-04-06) * paragraph [0095] - paragraph [0102]; figures 1, 2A-G * * paragraphs [0065], [0066], [0067], [0132], [0133] * * paragraph [0004] - paragraph [0010] * | 1-15 | |

TECHNICAL FIELDS
SEARCHED     (IPC)

B01L

The present search report has been drawn up for all claims

| Place of search | Date of completion of the search | Examiner |
|---|---|---|
| The Hague | 20 February 2025 | Nette, Julia |

EPO FORM 1503 03.82 (P04C01)

## ANNEX TO THE EUROPEAN SEARCH REPORT ON EUROPEAN PATENT APPLICATION NO.

EP 24 20 5542

This annex lists the patent family members relating to the patent documents cited in the above-mentioned European search report. The members are as contained in the European Patent Office EDP file on
The European Patent Office is in no way liable for these particulars which are merely given for the purpose of information.

20-02-2025

| Patent document cited in search report | Publication date | Patent family member(s) | Publication date |
|---|---|---|---|
| US 2020299672 A1 | 24-09-2020 | CN 113557090 A | 26-10-2021 |
| | | EP 3941630 A1 | 26-01-2022 |
| | | US 2020299672 A1 | 24-09-2020 |
| | | US 2024263165 A1 | 08-08-2024 |
| | | WO 2020190454 A1 | 24-09-2020 |
| US 2022062903 A1 | 03-03-2022 | CN 114192200 A | 18-03-2022 |
| | | EP 3960292 A1 | 02-03-2022 |
| | | JP 7278344 B2 | 19-05-2023 |
| | | JP 2022041989 A | 11-03-2022 |
| | | US 2022062903 A1 | 03-03-2022 |
| US 2023109130 A1 | 06-04-2023 | CA 3172579 A1 | 21-10-2021 |
| | | CN 115702043 A | 14-02-2023 |
| | | EP 4135897 A2 | 22-02-2023 |
| | | JP 2023522223 A | 29-05-2023 |
| | | US 2023109130 A1 | 06-04-2023 |
| | | WO 2021211754 A2 | 21-10-2021 |

EPO FORM P0459

For more details about this annex : see Official Journal of the European Patent Office, No. 12/82

**REFERENCES CITED IN THE DESCRIPTION**

**Patent documents cited in the description**

- JP 2023177411 A
- JP 2023177460 A

- US 20200001300